# EUROPEAN PATENT APPLICATION

(11) **EP 4 832 524 A1**
(43) Date of publication of application: **28.10.2026**
(21) Application number: 24916723.0
(22) Date of filing: 23.12.2024
(51) Int. Cl.: H04W 8/02, H04W 76/10

(54) **COMMUNICATION METHOD AND APPARATUS, AND COMPUTER-READABLE STORAGE MEDIUM**

(30) Priority: 12.01.2024 CN 202410054101
(71) Applicant: Huawei Technologies Co., Ltd., Shenzhen, Guangdong 518129 (CN)
(72) Inventor: SUN, Fei, Shenzhen, Guangdong 518129 (CN); LOU, Chong, Shenzhen, Guangdong 518129 (CN)
(74) Representative: Thun, Clemens
(86) International application number: PCT/CN2024/141649
(87) International publication number: WO 2025/148676

(57) **Abstract**

This application provides a communication method and apparatus, and a computer-readable storage medium. The method includes: A first terminal device sends a first service request to a first access network device, where the first service request includes identification information of a first service type and is used to request a service of the first service type in a target first network node. The first terminal device then receives a first service response from the first access network device, where the first service response includes first address information corresponding to the service of the first service type. The first terminal device transmits, based on the first address information corresponding to the service of the first service type, service data corresponding to the first service type to the target first network node via the first access network device. In embodiments of this application, end-to-end service data transmission from RAN local services to terminal devices can be implemented.

## Description

This application claims priority to Chinese Patent Application No. 202410054101.0, filed with the China National Intellectual Property Administration on January 12, 2024 and entitled "COMMUNICATION METHOD AND APPARATUS, AND COMPUTER-READABLE STORAGE MEDIUM", which is incorporated herein by reference in its entirety.

### TECHNICAL FIELD

The present invention relates to the field of communication technologies, and in particular, to a communication method and apparatus, and a computer-readable storage medium.

### BACKGROUND

With the continuous development of communication technologies, mobile communication networks evolve to be flexible, efficient, and software-defined. Currently, the 5G core network has adopted a service-based architecture (service-based architecture, SBA), in which multiple reusable "services" are defined and communicate through unified lightweight interfaces. However, the 5G access network (radio access network, RAN) side still follows conventional logical unit design and conventional logical interfaces.

In the future, to meet requirements for fast rollout and flexible deployment of new functions (for example, sensing and positioning) on the RAN side and to implement local servitization on the RAN side, the RAN side is also expected to adopt a service-based architecture.

### SUMMARY

Embodiments of this application disclose a communication method and apparatus, and a computer-readable storage medium, to implement end-to-end service data transmission from RAN local services to terminal devices.

According to a first aspect, a communication method is disclosed. The method may be applied to a first terminal device, or may be applied to a module (for example, a processor) in the first terminal device, or may be applied to a logical module or software that can implement all or some functions of the first terminal device. The following uses an example in which the method is applied to the first terminal device for description. The communication method may include: The first terminal device sends a first service request to a first access network device, where the first service request includes identification information of a first service type, and the first service request is used to request a service of the first service type in a target first network node. The first terminal device then receives a first service response from the first access network device, where the first service response includes first address information corresponding to the service of the first service type. The first terminal device transmits, based on the first address information corresponding to the service of the first service type, service data corresponding to the first service type to the target first network node via the first access network device.

In this embodiment of this application, when there is a local service requirement on a RAN side, the first terminal device may send a service request to the first access network device, and may include the identification information of the first service type in the service request, to indicate a service that the first terminal device needs to request. Then, the first access network device may send, to the first terminal device, a service response corresponding to the service request, where the service response may include the first address information corresponding to the service of the first service type. Then, the first terminal device may transmit, based on the first address information corresponding to the service of the first service type, the service data corresponding to the first service type, to implement end-to-end service data transmission from RAN local services to terminal devices.

For example, the first address information includes transport network layer information and/or URL information.

With reference to the first aspect, in a possible implementation, the first service request further includes one or more of the following: identification information of the target first network node, quality of service information, capability information of the first terminal device, and service identification information.

In this embodiment of this application, the first service request may carry information related to the requested service. For example, the identification information of the target first network node may indicate the target first network node to provide the corresponding service, the quality of service information may indicate quality of service to be met by the corresponding service, the capability information of the first terminal device may be used to request related processing (for example, selection of a sensing mode) in a service process, and the service identification information may be used to identify a current service request or identify a service process (for example, a service session) corresponding to the current service request. It can be learned that, including related information in the first service request can implement flexible selection of the first network node that provides the service, can control overall quality of service, and so on.

With reference to the first aspect, in a possible implementation, the first service response further includes service identification information and/or a radio bearer configuration.

With reference to the first aspect, in a possible implementation, before the sending the first service request to the first access network device, the method may further include: receiving service configuration information from the first access network device, where the service configuration information includes identification information of one or more first network nodes, and the one or more first network nodes include the target first network node.

In this embodiment of this application, identification information of one or more first network nodes that can provide a RAN local service may be sent to the first terminal device, so that when there is a service requirement, the first terminal device can initiate a service request and specify, by using the identification information of the first network node, a corresponding first network node to provide a service.

With reference to the first aspect, in a possible implementation, the identification information of the one or more first network nodes includes identifiers of the one or more first network nodes and/or first address information of the one or more first network nodes.

With reference to the first aspect, in a possible implementation, the service configuration information further includes information about one or more service types supported by each of the one or more first network nodes, and the information about the one or more service types includes identification information of the one or more service types.

In this embodiment of this application, the service configuration information may include the information about the one or more service types supported by each of the one or more first network nodes. In this way, the first terminal device can select, based on a service requirement of the first terminal device, an appropriate first network node to provide a service for the first terminal device, and a case in which the first terminal device selects a first network node that cannot provide the corresponding service can be avoided, so that it can be ensured that the corresponding service can be successfully obtained.

With reference to the first aspect, in a possible implementation, the first address information corresponding to the service of the first service type includes first address information of one or more target services corresponding to the first service type, and the first service response further includes identification information of the one or more target services.

In this embodiment of this application, the first address information corresponding to the service of the first service type may include the first address information of the one or more target services corresponding to the first service type. In this way, the first terminal device can interact with the target service based on the first address information of the target service.

According to a second aspect, a communication method is disclosed. The method may be applied to a first access network device, or may be applied to a module (for example, a processor) in the first access network device, or may be applied to a logical module or software that can implement all or some functions of the first access network device. The following uses an example in which the method is applied to the first access network device for description. The communication method may include: The first access network device receives a first service request from a first terminal device, where the first service request includes identification information of a first service type, and the first service request is used to request a service of the first service type in a target first network node. The first access network device then sends a first service response to the first terminal device, where the first service response includes first address information corresponding to the service of the first service type.

With reference to the second aspect, in a possible implementation, before the sending the first service response to the first terminal device, the method may further include: sending a second service request to the target first network node based on the first service request, where the second service request is used to request the service of the first service type in the target first network node; and receiving a second service response from the target first network node, where the second service response includes the first address information corresponding to the service of the first service type.

In this embodiment of this application, after receiving the first service request from the first terminal device, the first access network device may send the second service request to the target first network node based on the first service request, to request the service of the first service type in the target first network node. Then, the first access network device may receive, from the target first network node, the second service response corresponding to the second service request, where the second service response may include the first address information corresponding to the service of the first service type. Then, the first access network device may send, to the first terminal device, the first address information corresponding to the service of the first service type, so that the first terminal device can transmit, based on the first address information corresponding to the service of the first service type, service data corresponding to the first service type, to implement end-to-end service data transmission from RAN local services to terminal devices.

With reference to the second aspect, in a possible implementation, the first service request further includes identification information of the target first network node, and the sending the second service request to the target first network node based on the first service request includes: sending the second service request to the target first network node based on the identification information of the target first network node.

In this embodiment of this application, the first terminal device may flexibly specify, by using the identification information of the first network node, a specific first network node to provide a service for the first terminal device.

With reference to the second aspect, in a possible implementation, the second service request includes the identification information of the first service type.

With reference to the second aspect, in a possible implementation, the first service request further includes one or more of the following: quality of service information, capability information of the first terminal device, and service identification information; and the second service request further includes one or more of the following: the quality of service information, the capability information of the first terminal device, and the service identification information.

In this embodiment of this application, the second service request may carry information related to the requested service, so that the target first network node performs corresponding processing, for example, determines one or more target services corresponding to the first service type.

With reference to the second aspect, in a possible implementation, the second service request further includes a first identifier of the first terminal device, and the first identifier of the first terminal device is used to identify the first terminal device in the first access network device.

In this embodiment of this application, the first access network device and the target first network node may communicate with each other through a dedicated interface (for example, an Nx interface). Therefore, to distinguish between terminal devices on the Nx interface or identify a specific terminal device to which a message received on the Nx interface corresponds, the first access network device may allocate a first identifier to each terminal device, and the target first network node may allocate a second identifier to each terminal device. In this way, different terminal devices can be distinguished by using paired terminal device identifiers (the first identifier and the second identifier).

With reference to the second aspect, in a possible implementation, the second service response further includes one or more of the following: the first identifier of the first terminal device, a second identifier of the first terminal device, a service session identifier, tunnel information on a target first network node side, and information about a service data flow to be established, and the second identifier of the first terminal device is used to identify the first terminal device in the target first network node.

In this embodiment of this application, the second service response may include information related to a service session, tunnel information on the target first network node side, the information about the service data flow to be established, and the like. In this way, a corresponding service session, a related data transmission tunnel, and a related service data flow can be established to carry the service data corresponding to the first service type, to implement the end-to-end service data transmission from the RAN local services to the terminal devices.

With reference to the second aspect, in a possible implementation, the method may further include: sending a third service response to the target first network node, where the third service response includes one or more of the following: the first identifier of the first terminal device, the second identifier of the first terminal device, the service session identifier, tunnel information on a first access network device side, and information about a service data flow that is not successfully established.

In this embodiment of this application, the third service response may include the tunnel information on the first access network device side, to establish a data transmission tunnel between the first access network device and the target first network node.

With reference to the second aspect, in a possible implementation, the second service request includes identification information of one or more target services corresponding to the first service type.

With reference to the second aspect, in a possible implementation, the first service request further includes quality of service information, and the method may further include: determining, based on the quality of service information, quality of service corresponding to the one or more target services, where the second service request further includes the quality of service corresponding to the one or more target services.

In this embodiment of this application, the first service type may correspond to one or more target services. The first access network device may determine, based on the quality of service information, quality of service corresponding to the one or more target services, and then send the quality of service corresponding to the one or more target services to the target first network node, so that the target first network node determines whether each target service can meet corresponding quality of service, or the target first network node can perform corresponding processing on each target service based on the corresponding quality of service, to ensure the corresponding quality of service.

With reference to the second aspect, in a possible implementation, the second service response further includes quality of service that can be ensured by the one or more target services corresponding to the first service type, or air interface quality of service to be met on a first access network device side.

In this embodiment of this application, the second service response may directly include the air interface quality of service to be met on the first access network device side, or may include the quality of service that can be ensured by the one or more target services corresponding to the first service type. When the second service response includes the quality of service that can be ensured by the one or more target services corresponding to the first service type, the first access network device may determine, based on the quality of service that can be ensured by the one or more target services corresponding to the first service type, the air interface quality of service to be met on the first access network device side, and the first terminal device may perform corresponding processing (for example, air interface resource allocation and traffic control) based on the air interface quality of service to be met on the first access network device side, to ensure end-to-end quality of service.

With reference to the second aspect, in a possible implementation, the first address information corresponding to the service of the first service type includes first address information of the one or more target services corresponding to the first service type, and the second service response further includes the identification information of the one or more target services.

With reference to the second aspect, in a possible implementation, the first service response further includes service identification information and/or a radio bearer configuration.

With reference to the second aspect, in a possible implementation, before the receiving the first service request from the first terminal device, the method may further include: sending service configuration information to the first terminal device, where the service configuration information includes identification information of one or more first network nodes, and the one or more first network nodes include the target first network node.

With reference to the second aspect, in a possible implementation, the identification information of the one or more first network nodes includes identifiers of the one or more first network nodes and/or first address information of the one or more first network nodes.

With reference to the second aspect, in a possible implementation, the service configuration information further includes information about one or more service types supported by each of the one or more first network nodes, and the information about the one or more service types includes identification information of the one or more service types.

It should be noted that the technical solution in the second aspect of this application may correspond to the solution in the first aspect of this application. For related beneficial effects, refer to the beneficial effects of the first aspect.

According to a third aspect, a communication method is disclosed. The method may be applied to a target first network node, or may be applied to a module (for example, a processor) in the target first network node, or may be applied to a logical module or software that can implement all or some functions of the target first network node. The following uses an example in which the method is applied to the target first network node for description. The communication method may include: receiving a second service request from a first access network device, where the second service request is used to request a service of a first service type in the target first network node; and sending a second service response to the first access network device, where the second service response includes first address information corresponding to the service of the first service type.

With reference to the third aspect, in a possible implementation, the second service request includes identification information of the first service type.

With reference to the third aspect, in a possible implementation, the second service request further includes one or more of the following: quality of service information, capability information of a first terminal device, and service identification information.

With reference to the third aspect, in a possible implementation, the second service request further includes a first identifier of the first terminal device, and the first identifier of the first terminal device is used to identify the first terminal device in the first access network device.

With reference to the third aspect, in a possible implementation, the second service response further includes one or more of the following: the first identifier of the first terminal device, a second identifier of the first terminal device, a service session identifier, tunnel information on a target first network node side, and information about a service data flow to be established, and the second identifier of the first terminal device is used to identify the first terminal device in the target first network node.

With reference to the third aspect, in a possible implementation, the method may further include: receiving a third service response from the first access network device, where the third service response includes one or more of the following: the first identifier of the first terminal device, the second identifier of the first terminal device, the service session identifier, tunnel information on a first access network device side, and information about a service data flow that is not successfully established.

With reference to the third aspect, in a possible implementation, the second service request includes identification information of one or more target services corresponding to the first service type.

With reference to the third aspect, in a possible implementation, the second service request further includes quality of service corresponding to the one or more target services.

With reference to the third aspect, in a possible implementation, the second service response further includes quality of service that can be ensured by the one or more target services corresponding to the first service type, or air interface quality of service to be met on the first access network device side.

With reference to the third aspect, in a possible implementation, the first address information corresponding to the service of the first service type includes first address information of the one or more target services corresponding to the first service type, and the second service response further includes the identification information of the one or more target services.

It should be noted that the technical solution in the third aspect of this application may correspond to the solutions in the first aspect and the second aspect of this application. For related beneficial effects, refer to the beneficial effects of the first aspect and the second aspect.

According to a fourth aspect, a communication apparatus is disclosed. The communication apparatus may be a first terminal device, or may be a module (for example, a processor) in the first terminal device. The communication apparatus includes: a sending unit, configured to send a first service request to a first access network device, where the first service request includes identification information of a first service type, and the first service request is used to request a service of the first service type in a target first network node; and a receiving unit, configured to receive a first service response from the first access network device, where the first service response includes first address information corresponding to the service of the first service type. The sending unit is further configured to transmit, based on the first address information corresponding to the service of the first service type, service data corresponding to the first service type to the target first network node via the first access network device.

With reference to the fourth aspect, in a possible implementation, the first service request further includes one or more of the following: identification information of the target first network node, quality of service information, capability information of the first terminal device, and service identification information.

With reference to the fourth aspect, in a possible implementation, the first service response further includes service identification information and/or a radio bearer configuration.

With reference to the fourth aspect, in a possible implementation, before the sending unit sends the first service request to the first access network device, the receiving unit is further configured to receive service configuration information from the first access network device, where the service configuration information includes identification information of one or more first network nodes, and the one or more first network nodes include the target first network node.

With reference to the fourth aspect, in a possible implementation, the identification information of the one or more first network nodes includes identifiers of the one or more first network nodes and/or first address information of the one or more first network nodes.

With reference to the fourth aspect, in a possible implementation, the service configuration information further includes information about one or more service types supported by each of the one or more first network nodes, and the information about the one or more service types includes identification information of the one or more service types.

With reference to the fourth aspect, in a possible implementation, the first address information corresponding to the service of the first service type includes first address information of one or more target services corresponding to the first service type, and the first service response further includes identification information of the one or more target services.

According to a fifth aspect, a communication apparatus is disclosed. The communication apparatus may be a first access network device, or may be a module (for example, a processor) in the first access network device. The communication apparatus includes: a receiving unit, configured to receive a first service request from a first terminal device, where the first service request includes identification information of a first service type, and the first service request is used to request a service of the first service type in a target first network node; and a sending unit, configured to send a first service response to the first terminal device, where the first service response includes first address information corresponding to the service of the first service type.

With reference to the fifth aspect, in a possible implementation, before the sending unit sends the first service response to the first terminal device, the sending unit is further configured to send a second service request to the target first network node based on the first service request, where the second service request is used to request the service of the first service type in the target first network node; and the receiving unit is further configured to receive a second service response from the target first network node, where the second service response includes the first address information corresponding to the service of the first service type.

With reference to the fifth aspect, in a possible implementation, the first service request further includes identification information of the target first network node, and the sending unit is specifically configured to send the second service request to the target first network node based on the identification information of the target first network node.

With reference to the fifth aspect, in a possible implementation, the second service request includes the identification information of the first service type.

With reference to the fifth aspect, in a possible implementation, the first service request further includes one or more of the following: quality of service information, capability information of the first terminal device, and service identification information; and the second service request further includes one or more of the following: the quality of service information, the capability information of the first terminal device, and the service identification information.

With reference to the fifth aspect, in a possible implementation, the second service request further includes a first identifier of the first terminal device, and the first identifier of the first terminal device is used to identify the first terminal device in the first access network device.

With reference to the fifth aspect, in a possible implementation, the second service response further includes one or more of the following: the first identifier of the first terminal device, a second identifier of the first terminal device, a service session identifier, tunnel information on a target first network node side, and information about a service data flow to be established, and the second identifier of the first terminal device is used to identify the first terminal device in the target first network node.

With reference to the fifth aspect, in a possible implementation, the sending unit is further configured to send a third service response to the target first network node, where the third service response includes one or more of the following: the first identifier of the first terminal device, the second identifier of the first terminal device, the service session identifier, tunnel information on a first access network device side, and information about a service data flow that is not successfully established.

With reference to the fifth aspect, in a possible implementation, the second service request includes identification information of one or more target services corresponding to the first service type.

With reference to the fifth aspect, in a possible implementation, the first service request further includes quality of service information, and the apparatus further includes a processing unit, configured to determine, based on the quality of service information, quality of service corresponding to the one or more target services, where the second service request further includes the quality of service corresponding to the one or more target services.

With reference to the fifth aspect, in a possible implementation, the second service response further includes quality of service that can be ensured by the one or more target services corresponding to the first service type, or air interface quality of service to be met on the first access network device side.

With reference to the fifth aspect, in a possible implementation, the first address information corresponding to the service of the first service type includes first address information of the one or more target services corresponding to the first service type, and the second service response further includes the identification information of the one or more target services.

With reference to the fifth aspect, in a possible implementation, the first service response further includes service identification information and/or a radio bearer configuration.

With reference to the fifth aspect, in a possible implementation, before the receiving unit receives the first service request from the first terminal device, the sending unit is further configured to send service configuration information to the first terminal device, where the service configuration information includes identification information of one or more first network nodes, and the one or more first network nodes include the target first network node.

With reference to the fifth aspect, in a possible implementation, the identification information of the one or more first network nodes includes identifiers of the one or more first network nodes and/or first address information of the one or more first network nodes.

With reference to the fifth aspect, in a possible implementation, the service configuration information further includes information about one or more service types supported by each of the one or more first network nodes, and the information about the one or more service types includes identification information of the one or more service types.

According to a sixth aspect, a communication apparatus is disclosed. The communication apparatus may be a target first network node, or may be a module (for example, a processor) in the target first network node. The communication apparatus includes: a receiving unit, configured to receive a second service request from a first access network device, where the second service request is used to request a service of a first service type in the target first network node; and a sending unit, configured to send a second service response to the first access network device, where the second service response includes first address information corresponding to the service of the first service type.

With reference to the sixth aspect, in a possible implementation, the second service request includes identification information of the first service type.

With reference to the sixth aspect, in a possible implementation, the second service request further includes one or more of the following: quality of service information, capability information of a first terminal device, and service identification information.

With reference to the sixth aspect, in a possible implementation, the second service request further includes a first identifier of the first terminal device, and the first identifier of the first terminal device is used to identify the first terminal device in the first access network device.

With reference to the sixth aspect, in a possible implementation, the second service response further includes one or more of the following: the first identifier of the first terminal device, a second identifier of the first terminal device, a service session identifier, tunnel information on a target first network node side, and information about a service data flow to be established, and the second identifier of the first terminal device is used to identify the first terminal device in the target first network node.

With reference to the sixth aspect, in a possible implementation, the receiving unit is further configured to receive a third service response from the first access network device, where the third service response includes one or more of the following: the first identifier of the first terminal device, the second identifier of the first terminal device, the service session identifier, tunnel information on a first access network device side, and information about a service data flow that is not successfully established.

With reference to the sixth aspect, in a possible implementation, the second service request includes identification information of one or more target services corresponding to the first service type.

With reference to the sixth aspect, in a possible implementation, the second service request further includes quality of service corresponding to the one or more target services.

With reference to the sixth aspect, in a possible implementation, the second service response further includes quality of service that can be ensured by the one or more target services corresponding to the first service type, or air interface quality of service to be met on the first access network device side.

With reference to the sixth aspect, in a possible implementation, the first address information corresponding to the service of the first service type includes first address information of the one or more target services corresponding to the first service type, and the second service response further includes the identification information of the one or more target services.

According to a seventh aspect, a communication system is disclosed. The communication system includes a first terminal device and a first access network device. The first terminal device is configured to implement the method provided in any one of the first aspect and the possible implementations of the first aspect. The first access network device is configured to implement the method provided in any one of the second aspect and the possible implementations of the second aspect.

According to an eighth aspect, a communication system is disclosed. The communication system includes a first terminal device, a first access network device, and a target first network node. The first terminal device is configured to implement the method provided in any one of the first aspect and the possible implementations of the first aspect. The first access network device is configured to implement the method provided in any one of the second aspect and the possible implementations of the second aspect. The target first network node is configured to implement the method provided in any one of the third aspect or the possible implementations of the third aspect.

According to a ninth aspect, a communication apparatus is disclosed, and includes a processor and a communication interface. The communication interface is configured to receive and/or send data, and the processor invokes a computer program or computer instructions stored in a memory to implement the method provided in any one of the first aspect and the possible implementations of the first aspect.

According to a tenth aspect, a communication apparatus is disclosed, and includes a processor and a communication interface. The communication interface is configured to receive and/or send data, and the processor invokes a computer program or computer instructions stored in a memory to implement the method provided in any one of the second aspect and the possible implementations of the second aspect.

According to an eleventh aspect, a communication apparatus is disclosed, and includes a processor and a communication interface. The communication interface is configured to receive and/or send data, and the processor invokes a computer program or computer instructions stored in a memory to implement the method provided in any one of the third aspect and the possible implementations of the third aspect.

In a possible implementation, the communication apparatus disclosed in the ninth aspect, the communication apparatus disclosed in the tenth aspect, and the communication apparatus disclosed in the eleventh aspect may include one or more processors.

Optionally, the communication apparatus disclosed in the ninth aspect, the communication apparatus disclosed in the tenth aspect, and the communication apparatus disclosed in the eleventh aspect further include one or more memories.

According to a twelfth aspect, a computer-readable storage medium is disclosed. The computer-readable storage medium stores a computer program or computer instructions. When the computer program or the computer instructions are run, the method provided in any one of the first aspect and the possible implementations of the first aspect is implemented, or the method provided in any one of the second aspect and the possible implementations of the second aspect is implemented, or the method provided in any one of the third aspect and the possible implementations of the third aspect is implemented.

According to a thirteenth aspect, a chip is disclosed, and includes a processor, configured to execute a program stored in a memory. When the program is executed, the chip is caused to perform the method provided in any one of the first aspect and the possible implementations of the first aspect, or perform the method provided in any one of the second aspect and the possible implementations of the second aspect, or perform the method provided in any one of the third aspect and the possible implementations of the third aspect.

In a possible implementation, the memory is located outside the chip.

According to a fourteenth aspect, a computer program product is disclosed. The computer program product includes computer program code. When the computer program code is run, the method provided in any one of the first aspect and the possible implementations of the first aspect is performed, or the method provided in any one of the second aspect and the possible implementations of the second aspect is performed, or the method provided in any one of the third aspect and the possible implementations of the third aspect is performed.

It should be understood that mutual reference may be made to implementations and beneficial effect of the plurality of aspects or any one of the possible implementations of this application.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a diagram of a service-based architecture of a 5G network according to an embodiment of this application;
FIG. 2 is a diagram of adopting a RAN service-based architecture according to an embodiment of this application;
FIG. 3 is a diagram of a control plane protocol stack according to an embodiment of this application;
FIG. 4 is a diagram of a data plane protocol stack according to an embodiment of this application;
FIG. 5 is a diagram of another control plane protocol stack according to an embodiment of this application;
FIG. 6 is a diagram of another data plane protocol stack according to an embodiment of this application;
FIG. 7 is a schematic flowchart of a communication method according to an embodiment of this application;
FIG. 8 is a schematic flowchart of another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a diagram of a structure of a communication apparatus according to an embodiment of this application;
FIG. 12 is a diagram of a structure of another communication apparatus according to an embodiment of this application;
FIG. 13 is a diagram of a structure of still another communication apparatus according to an embodiment of this application; and
FIG. 14 is a diagram of a hardware structure of a communication apparatus according to an embodiment of this application.

### DESCRIPTION OF EMBODIMENTS

Embodiments of this application disclose a communication method and apparatus, and a computer-readable storage medium, to implement end-to-end service data transmission from RAN local services to terminal devices. The following clearly and completely describes technical solutions in embodiments of this application with reference to accompanying drawings in embodiments of this application.

In embodiments of this application, some scenarios are described by using a scenario of a 5th generation (5th generation, 5G) communication network as an example. However, it should be understood that the solutions in embodiments of this application may be further applied to another communication network, for example, a 6th generation (6th generation, 6G) communication network, and a corresponding name may be replaced with a name of a corresponding function/device in the another communication network.

To better understand embodiments of this application, the following first describes a system architecture in embodiments of this application.

To improve flexibility and scalability of the communication network, a service-based architecture (service-based architecture, SBA) is used in a 5G core network. In the SBA architecture, a plurality of network functions (network functions, NFs) may be flexibly defined. Each NF may provide an independent function (service) externally, and the NFs may access each other through service-based interfaces.

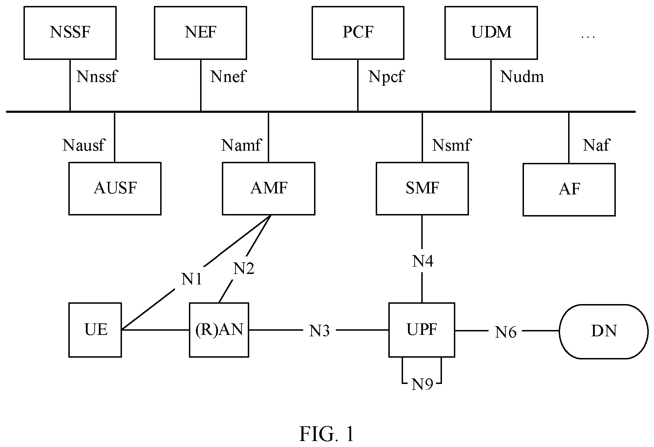

FIG. 1 is a diagram of a service-based architecture of a 5G network according to an embodiment of this application. As shown in FIG. 1, the service-based architecture may include functions such as a network slice selection function (network slice selection function, NSSF), an authentication server function (authentication server function, AUSF), a network capability exposure function (network exposure function, NEF), an access and mobility management function (access and mobility management function, AMF), a policy and control function (policy and control function, PCF), a session management function (session management function, SMF), a unified data management (unified data management, UDM) function, and an application function (application function, AF). These functions may respectively provide SBA interfaces such as Nnssf, Nausf, Nnef, Namf, Npcf, Nsmf, Nudm, and Naf. For definitions and specific roles of the functions such as the NSSF, the AUSF, the NEF, the AMF, and the SMF, refer to related descriptions in a 5G standard. The following briefly describes user equipment (user equipment, UE) and a (radio) access network (R)AN.

The user equipment (user equipment, UE) may also be referred to as a terminal device, a terminal, a mobile station (mobile station, MS), a mobile terminal (mobile terminal, MT), customer premise equipment (customer premise equipment, CPE), or the like, is a device having a wireless communication function, and may provide a voice and/or data connectivity service for a user. The terminal device may be a handheld terminal, a notebook computer, an RSU (road side unit, road side unit), a subscriber unit (subscriber unit), a cellular phone (cellular phone), a smartphone (smartphone), a wireless data card, a personal digital assistant (personal digital assistant, PDA) computer, a tablet computer, a label, a wireless modem (modem), another processing device connected to a wireless modem, a handheld (handheld) device, a laptop computer (laptop computer), a cordless phone (cordless phone) or a wireless local loop (wireless local loop, WLL) station, a machine type communication (machine type communication, MTC) terminal, a wearable device (for example, a smart watch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or a meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, an uncrewed aerial vehicle, or an airplane), or another device that can access the network. The terminal device may be fixed or mobile, and may be deployed on land, including an indoor device, an outdoor device, a handheld device, a wearable device, or a vehicle-mounted device, or may be deployed on water (for example, on a ship), or may be deployed in the air (for example, on an airplane, a balloon, or a satellite).

The (R)AN may be a network including a plurality of access network devices, and may be configured to implement a function of a radio physical layer, a resource scheduling and radio resource management function, a radio access control function, a mobility management function, and the like. The (R)AN may be connected to a user plane function (user plane function, UPF) through a user plane interface N3, to transmit data of the terminal device. The (R)AN may alternatively establish a control plane signaling connection to the AMF through a control plane interface N2, to implement a function like radio access bearer control. It should be understood that the access network device mainly provides access for the terminal device. The access network device may include a radio access network (radio access network, RAN) device and an access node (access node, AN) device. The RAN device may include base stations in various forms, for example, a macro base station, a micro base station (which may also be referred to as a small cell), a relay station, an access point, and a balloon station. It should be understood that in systems using different radio access technologies, names of RAN devices may be different, for example, an NB (NodeB) in wideband code division multiple access (wideband code division multiple access, WCDMA), an eNB or an eNodeB (evolved NodeB) in long term evolution (long term evolution, LTE), and a next generation NodeB (next generation NodeB, gNB) in a 5G system.

It can be learned from FIG. 1 that functional entities in a 5G core network (core network, 5GC) may interact with each other through the SBA interface. For example, the AF may interact with the NEF through the Nnef interface, to use a service provided by the NEF. For another example, the NEF may interact with the UDM through the Nudm interface, to use a service provided by the UDM. In a specific implementation, the service-based interface may be implemented based on a hypertext transfer protocol (hypertext transfer protocol, HTTP), a hypertext transfer protocol secure (hypertext transfer protocol secure, HTTPS), or the like.

Based on the service-based architecture, flexible deployment of network functions, flexible upgrade of the network, and the like may be implemented. For example, when an NF needs to be added, the added NF may perform service registration via a network repository function (network repository function, NRF). The NRF may further provide mechanisms such as service management and service discovery. For another example, when a single NF is faulty, the NF may be brought offline, and another NF of a same type provides a service. After the fault of the NF is resolved, the NF is brought online again. For another example, software and hardware of a single NF may be flexibly upgraded without affecting the entire network.

It can be learned that the service-based architecture may improve flexibility and scalability of the network. For evolution of a future network architecture, the service-based architecture may also be used on a RAN side, to implement fast rollout and flexible deployment of new functions on the RAN side by using service-based interfaces and functions. In addition, flexible service orchestration, traffic optimization, and the like may be further performed based on a service requirement. In addition, potential new functions and services on the RAN side, for example, sensing, positioning, and artificial intelligence (artificial intelligence, AI), each have a localization requirement. That is, the RAN side needs to support these new functions and services locally. In this way, related data is in a closed loop on the RAN side and does not enter a public network, so that security and privacy of the data can be ensured and real-time sensing of an air interface status and a terminal status on the RAN side can be implemented for these new functions and services. The following describes a solution for adopting a RAN service-based architecture.

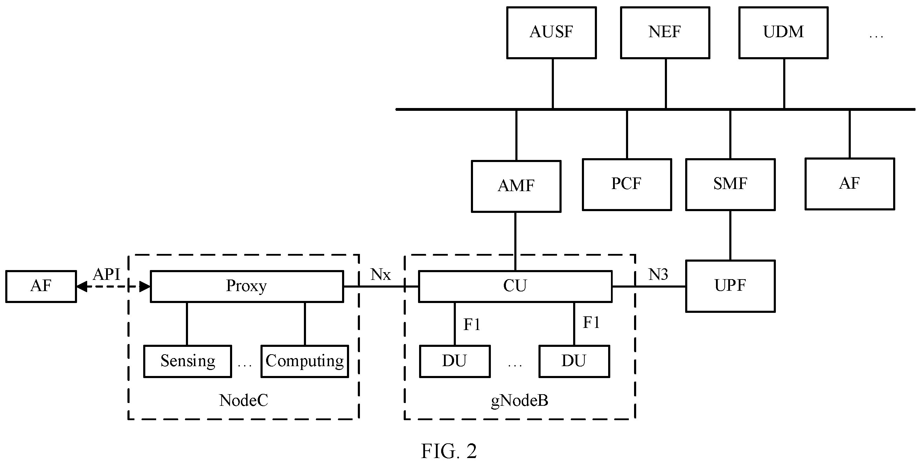

FIG. 2 is a diagram of adopting a RAN service-based architecture according to an embodiment of this application. As shown in FIG. 2, a service-based node NodeC is introduced into the RAN service-based architecture, and the NodeC is parallel to a conventional node (for example, a gNodeB) that provides a communication function. In other words, a main function of an original node in a RAN may not change, and is still used to provide a RAN communication function (for example, scheduling of an air interface resource). The newly introduced NodeC is used to provide a RAN service function, to meet a local service-based requirement on the RAN side. For example, the NodeC may integrate various services (functions) such as a sensing service, a positioning service, and a computing service (for example, AI inference), and each service may provide a service-based interface. In this embodiment of this application, a service in the NodeC may also be referred to as an NF or another name. This is not limited herein.

In some deployments, the gNodeB may include one convergence unit/central unit (central unit, CU), one or more distributed units (distributed units, DUs), and the like. The CU may implement some functions of the gNodeB, and the DU may implement some functions of the gNodeB. In addition, the CU may be configured to control operations of the one or more DUs. For example, the CU may implement functions of a radio resource control (radio resource control, RRC) layer and a packet data convergence protocol (packet data convergence protocol, PDCP) layer, and may further implement a function of a service data adaptation protocol (service data adaptation protocol, SDAP) layer. The DU may implement functions of a radio link control (radio link control, RLC) layer and a media access control (media access control, MAC) layer, and may further implement some or all functions of a physical (physical, PHY) layer. For specific descriptions of the foregoing protocol layers, refer to related technical specifications of the 3rd generation partnership project (3rd generation partnership project, 3GPP).

In this embodiment of this application, the NodeC may include a proxy (proxy) function. The proxy function may be used to isolate the service function and the communication function in the RAN, to control third-party access. Specifically, for the interior of the NodeC, the proxy function may be responsible for service registration, authorization, and access management, and may further be responsible for signaling forwarding, data packet header addition/change, service data routing, path update, and the like. For the exterior of the NodeC, the interfaces of all the services may be shielded from the gNodeB, and the services (for example, the sensing service) inside the NodeC may be provided for the CU via the proxy function. In other words, the gNodeB needs to use the proxy function to obtain the services inside the NodeC, and cannot directly access the interfaces corresponding to the services. The proxy function may further expose an API externally, to interface with a RAN capability exposure request of a third party (for example, an AF). In addition, access of the third party to radio information may be controlled by the CU, to implement limited exposure. Optionally, the proxy function may further be responsible for storing a service context. The service context may include a UE identifier, a UE capability, quality of service, a service status, and the like.

In some possible implementations, the CU and the proxy function may interact with each other through an Nx interface, and the Nx interface is an internal interface of the RAN. In addition, the Nx interface is a universal interface not directed to a specific service, and facilitates expansion and upgrade of the NodeC.

For example, the proxy function and the services in the NodeC may interact with each other through the service-based interface. The proxy function may be used as a "backplane" to provide a standard "slot" for each service. The following is a simple example of a service template. The service template may include a service type of a corresponding service, and the service type may indicate/identify a function of the corresponding service. The service template may further include service-related parameters, for example, a service requirement, a configuration parameter, a computing capability, and communication latency. The service template may further include service status information. For example, the service status information may be "Statefull" or "Stateless", where "Statefull" indicates that the proxy needs to back up the service context, and "Stateless" indicates that the proxy does not need to back up the service context. In some possible implementations, the corresponding service may be registered by using the service template.

For ease of description, in the following embodiments, the service in the NodeC is represented as a NodeC-NF, and the proxy function in the NodeC is represented as a NodeC-Proxy.

In some possible implementations, the services may also interact with each other through the service-based interfaces provided by the services.

It should be understood that FIG. 1 and FIG. 2 are merely example diagrams. The architectures shown in FIG. 1 and FIG. 2 may further include more or fewer devices, network elements, and the like. This is not limited herein.

It should be further understood that the foregoing network element, function, or service may be implemented in a form of hardware, computer software, or a combination of hardware and computer software. For example, the foregoing network element, function, or service may be implemented by one device, may be jointly implemented by a plurality of devices, or may be implemented by one functional module in one device. This is not specifically limited in embodiments of this application.

It should be noted that in some possible implementations, the proxy function and the services in the NodeC may be separately implemented by using different hardware devices, or may be separately implemented by using functional modules in different hardware devices. This is not limited in embodiments of this application.

It should be understood that the technical solutions provided in embodiments of this application may be applied to various communication systems of a radio access technology (radio access technology, RAT), for example, a 5th generation (5th generation, 5G) communication system, a transition system between the 5G communication system and a 6G communication system (the transition system may also be referred to as a 5.5G communication system), and a network integrating a plurality of systems. Certainly, the technical solutions may also be applied to future communication systems, for example, the 6th generation (6th generation, 6G) communication system, even a 7th generation (7th generation, 7G) communication system, and the like.

It should be noted that a system architecture, a network architecture, a service scenario (or an application scenario), and the like described in embodiments of this application are intended to describe the technical solutions in embodiments of this application more clearly, and do not constitute a limitation on the technical solutions provided in embodiments of this application. A person of ordinary skill in the art may know that: With evolution of the communication network architecture and emergence of new service scenarios, the technical solutions provided in embodiments of this application are also applicable to similar technical problems.

To better understand embodiments of this application, the following briefly describes related content, terms, or nouns in this application.

### 1. SRv6

SRv6 (segment routing over IPv6, segment routing over IPv6) is a technology that is designed based on a source routing concept and that is for forwarding an IPv6 data packet on a network, and may control a packet forwarding path.

Specifically, SRv6 may be implemented by using an IPv6 extension packet header, and a segment routing header SRH (Segment Routing Header, segment routing header) may be inserted into an IPv6 packet. The SRH extension header may be used to specify information about a packet forwarding path. In a specific implementation, the SRH extension header may include a segment list (segment list), and the segment list may include a plurality of SIDs (segment identifiers, segment identifiers), where the plurality of SIDs may indicate the packet forwarding path. The SID may also be referred to as an IPv6 SID, an IPv6 segment, or the like.

In an SRv6 packet, a destination address (DA) in the packet may identify a next node that the current packet passes through. Therefore, in a packet transmission process, an intermediate node may continuously update the destination address and an offset address stack based on the segment list to complete hop-by-hop forwarding. The offset address stack may be used to determine an active SID in the segment list.

For example, a length of the SID may be 128 bits (bits), the 128 bits may be flexibly divided into a plurality of segments, and a function and a length of each segment may be self-defined. For example, the 128 bits may be divided into three segments: a first segment (for example, a locator), a second segment (for example, a function), and a third segment (for example, arguments). The first segment may be used to route and forward a data packet. The second segment may indicate an operation (for example, a forwarding operation) to be performed by a device, and different operations may be indicated by different functions. The third segment is optional, and may include a parameter needed when the operation indicated by the second segment is performed. It should be understood that the functions (functions) may be flexibly defined based on a service requirement.

It can be learned that SRv6 provides a path and service orchestration capability, and may implement pre-planning of a packet forwarding path and an operation to be performed when each node on the path receives a packet.

### 2. Quality of service (quality of service, QoS)

A communication network includes a plurality of communication services (for example, a voice, a mail, a video, and an online game). Quality of service requirements of different services are usually different. For example, some services may be very sensitive to latency, and some services may be very sensitive to a packet loss rate. Therefore, to meet quality of service requirements of different services, the network needs to allocate and schedule resources based on the quality of service requirements, and provide different quality of service for the different services. For a communication service, quality of service may usually include bandwidth, latency, a packet loss rate, a transmission rate, and the like.

It may be understood that, to ensure end-to-end quality of service, a corresponding QoS model or QoS policy is usually used in the communication network. The QoS model or the QoS policy may be understood as a complete set of solutions for ensuring the end-to-end quality of service, and may relate to all devices in an end-to-end process. In other words, the end-to-end quality of service needs to be guaranteed collaboratively by all the devices in the end-to-end process.

For example, in a 5G communication system, to meet diversified service requirements, a plurality of QoS flows may be established. Different QoS flows may correspond to different quality of service requirements. A terminal device, a RAN, a UPF network element, and the like may collaboratively ensure the quality of service requirements such as latency and bandwidth of the QoS flows. In a specific implementation, the terminal device may include a QoS rule (rule) corresponding to the QoS flow, a RAN side may include a related QoS configuration corresponding to the QoS flow, the UPF network element may include a data packet detection rule (packet detection rule, PDR) corresponding to the QoS flow, and the like. The QoS rule and the data packet detection rule may include a packet filter set (packet filter set), the packet filter set may include a plurality of packet filters (packet filters), and each packet filter may be downlink, uplink, or bidirectional. The QoS rule, the QoS configuration, and the PDR may be allocated by an SMF. For more detailed content of 5G QoS, refer to related descriptions in the standard.

Based on the architecture shown in FIG. 2, the following illustrates two possible solutions of a control plane protocol stack and a data plane protocol stack.

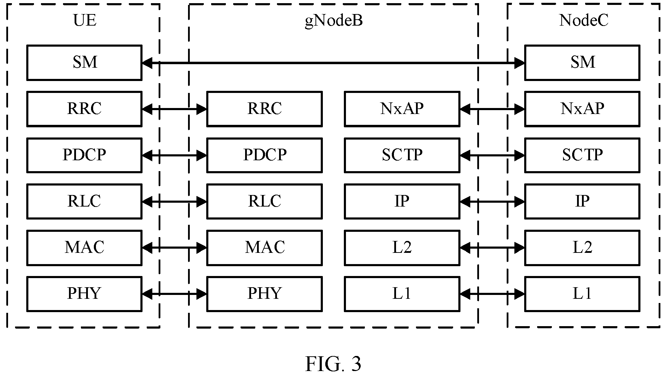

FIG. 3 is a diagram of a control plane protocol stack according to an embodiment of this application. As shown in FIG. 3, an air interface control plane protocol stack between UE and a gNodeB may be RRC/PDCP/RLC/MAC/PHY. A control plane protocol stack between the gNodeB and a NodeC/NodeC-Proxy may be NxAP/SCTP/IP/L2/L1. NxAP is a control layer protocol of an Nx interface between the gNodeB and the Node C, SCTP is a stream control transmission protocol (stream control transmission protocol), IP is an internet protocol (internet protocol), L2 may be a data link layer protocol, and L1 may be a physical layer protocol.

In addition, a service management (service management, SM) protocol layer/function may be further included above an RRC layer on a UE side and an NxAP layer on a NodeC side. An SM protocol layer on the UE side interfaces with an SM protocol layer on the NodeC side, and the SM layer is mainly used to transmit service-related control information between the UE and the NodeC. It can be learned from FIG. 3 that the SM layer is invisible to the gNodeB. In other words, the gNodeB may transparently transmit information at the SM layer.

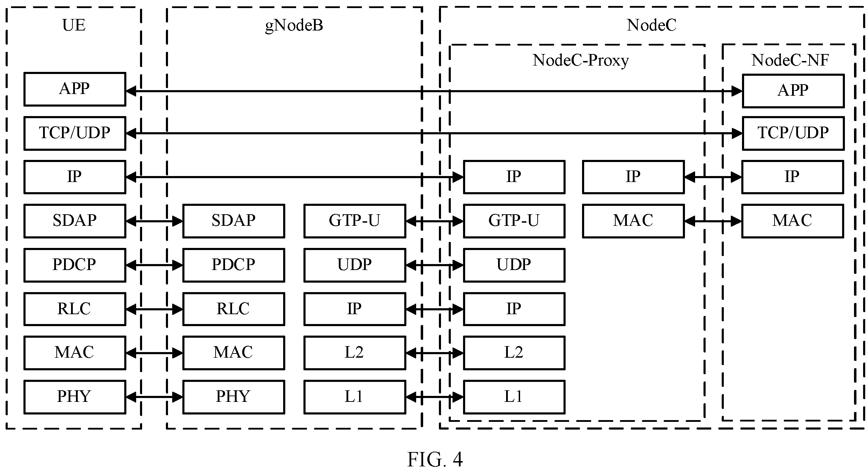

FIG. 4 is a diagram of a data plane protocol stack according to an embodiment of this application. As shown in FIG. 4, an air interface data plane protocol stack between UE and a gNodeB may be SDAP/PDCP/RLC/MAC/PHY, a data plane protocol stack between the gNodeB and a NodeC-Proxy may be GTP-U/UDP/IP/L2/L1, and a data plane protocol stack between the NodeC-Proxy and a NodeC-NF may be IP/MAC. GTP-U is a GPRS tunneling protocol (GPRS tunneling protocol-user plane), and UDP is a user datagram protocol (user datagram protocol).

In addition, it can be learned from FIG. 4 that, an IP layer may be further included above an SDAP layer on a UE side, and an IP layer may be further included above a GTP-U layer of the NodeC-Proxy. In addition, the IP layer on the UE side may interface with the IP layer of the NodeC-Proxy. A TCP/UDP layer and an APP layer may be further included above the IP layer on the UE side, and a TCP/UDP layer and an APP layer may be further included above an IP layer of the NodeC-NF. The TCP/UDP layer and the APP layer on the UE side may interface with the TCP/UDP layer and the APP layer of the NodeC-NF. The APP layer may be an application (application) layer, and TCP may be a transmission control protocol (transmission control protocol).

It should be noted that, in some possible implementations, the data plane protocol stack between the NodeC-Proxy and the NodeC-NF in FIG. 4 may alternatively be IP/L2/L1.

For example, the control plane protocol stack shown in FIG. 3 and the data plane protocol stack shown in FIG. 4 may be used together, and the protocol stacks shown in FIG. 3 and FIG. 4 may be respectively end-to-end control plane and data plane protocol stacks based on a dedicated interface.

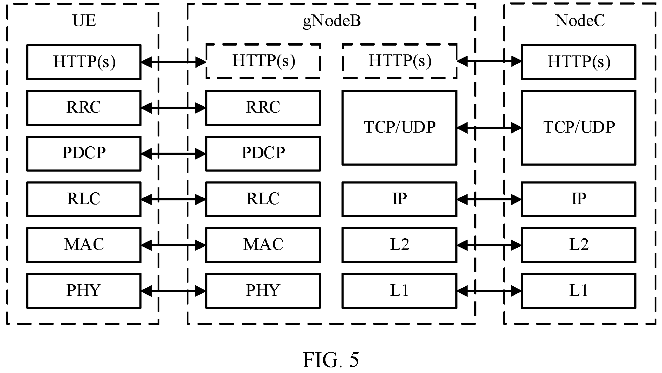

FIG. 5 is a diagram of another control plane protocol stack according to an embodiment of this application. As shown in FIG. 5, an air interface control plane protocol stack between UE and a gNodeB may be HTTP(s)/RRC/PDCP/RLC/MAC/PHY. A control plane protocol stack between the gNodeB and a NodeC/NodeC-Proxy may be HTTP(s)/TCP(UDP)/IP/L2/L1. HTTP(s) indicates that either HTTP or HTTPs can be used. HTTPs may be HTTP+SSL (secure socket layer, secure socket layer)/TLS (transport layer security, transport layer security). An SSL/TLS layer is usually between an HTTP layer and a TCP/UDP layer. It should be noted that a version of the HTTP protocol may be HTTP2, HTTP3, or the like. This is not limited herein.

It should be understood that, in some possible implementations, peer TCP/UDP layers and IP layers may be further included between HTTP(s) layers and RRC layers on a UE side and a gNodeB side.

It should be noted that in some possible implementations, the HTTP(s) layer may not be included on the gNodeB side, and the HTTP(s) layer on the UE side may directly interface with an HTTP(s) layer on a NodeC side. In this case, the air interface control plane protocol stack between the UE and the gNodeB may alternatively be RRC/PDCP/RLC/MAC/PHY, the control plane protocol stack between the gNodeB and the NodeC/NodeC-Proxy may alternatively be NxAP/SCTP/IP/L2/L1, and a protocol stack between the UE and the NodeC/NodeC-Proxy may be HTTP(s)/TCP(UDP)/IP. In addition, the HTTP(s) layer is invisible to the gNodeB. In other words, the gNodeB transparently forwards an HTTP message between the UE and the NodeC.

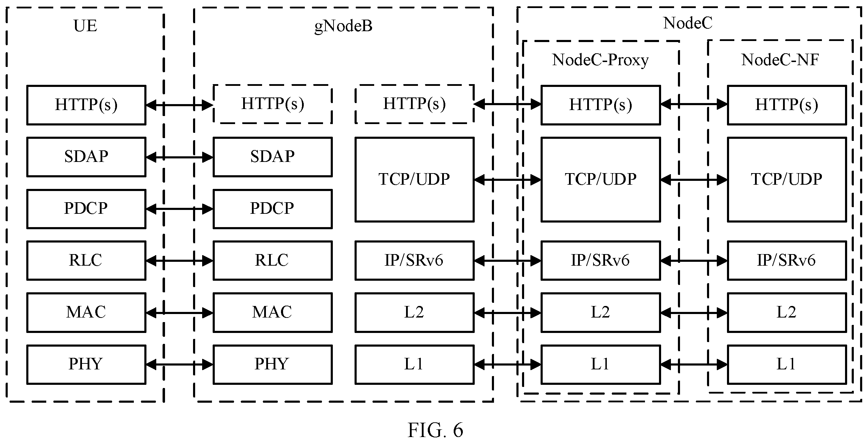

FIG. 6 is a diagram of another data plane protocol stack according to an embodiment of this application. As shown in FIG. 6, an air interface data plane protocol stack between UE and a gNodeB may be HTTP(s)/SDAP/PDCP/RLC/MAC/PHY, a data plane protocol stack between the gNodeB and a NodeC-Proxy may be HTTP(s)/TCP(UDP)/IP(SRv6)/L2/L1, and a data plane protocol stack between the NodeC-Proxy and a NodeC-NF may be HTTP(s)/TCP(UDP)/IP(SRv6)/L2/L1.

It should be understood that, in some possible implementations, peer TCP/UDP layers and IP/SRv6 layers may be further included between HTTP(s) layers and SDAP layers on a UE side and a gNodeB side.

It should be noted that in some possible implementations, the HTTP(s) layer may not be included on the gNodeB side, and the HTTP(s) layer on the UE side may directly interface with an HTTP(s) layer on a NodeC-Proxy side. In this case, the air interface data plane protocol stack between the UE and the gNodeB may alternatively use the protocol stack solution shown in FIG. 4, and the APP layer in FIG. 4 may be replaced with the HTTP(s) layer.

When a network layer is based on SRv6, for a specific service type, a network node may set, by editing an SRH field, a data transmission path between several NodeC-NFs related to the service type, an operation to be performed on each NodeC-NF, and a QoS requirement corresponding to each NodeC-NF. For example, the gNodeB may sense related configuration information of a service inside a NodeC, and the gNodeB may be responsible for SRv6 packet encapsulation of service data. The SRH field may include a service path, a QoS parameter on each corresponding NF, and a data operation to be performed on each corresponding NF.

It may be understood that when HTTP(s) is used at a top layer of the NodeC-NF, a related NF may be developed based on an HTTP standard.

For example, the control plane protocol stack shown in FIG. 5 and the data plane protocol stack shown in FIG. 6 may be used together, and the protocol stacks shown in FIG. 5 and FIG. 6 may be respectively end-to-end control plane and data plane protocol stacks based on a universal service-based interface.

It should be noted that the end-to-end control plane and data plane protocol stacks shown in FIG. 3 to FIG. 6 are merely examples for description. This is not limited in embodiments of this application. In some other possible implementations of this application, variations of the end-to-end control plane and data plane protocol stacks in FIG. 3 to FIG. 6 may alternatively be used, or other end-to-end control plane and data plane protocol stacks may be used. For example, the IP layer in FIG. 4 may alternatively be replaced with IPv6-based SRv6.

The following first describes, by using an example, an overall processing procedure of the technical solutions provided in embodiments of this application. The processing procedure mainly relates to a first terminal device, a first access network device, and a first network node. The first access network device may be a device (for example, a gNodeB) that provides a communication function in a RAN, and the first network node may be a device (for example, a NodeC) that provides a service function in the RAN. For details, refer to the architecture shown in FIG. 2.

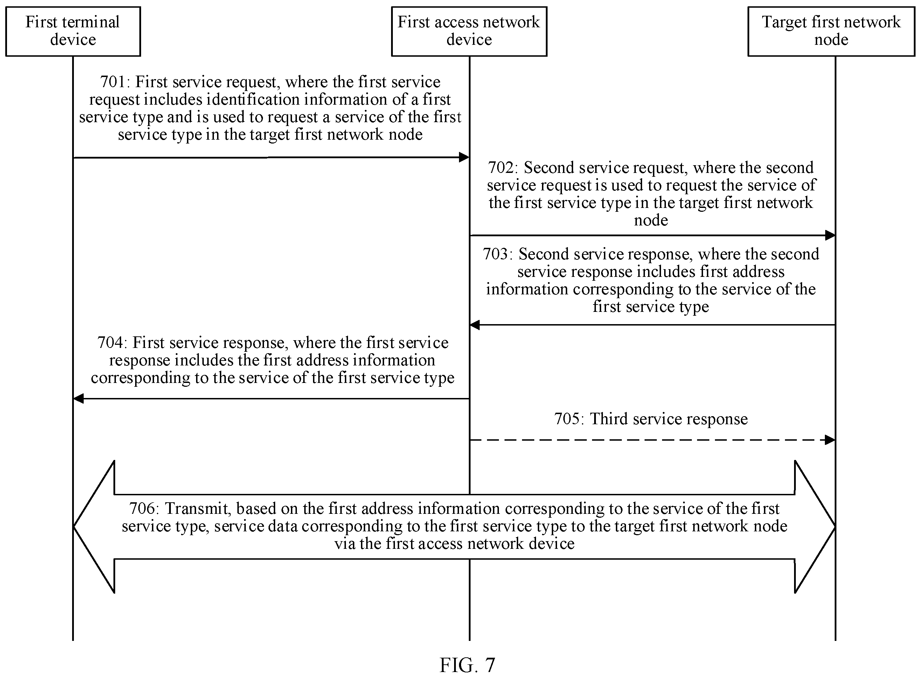

FIG. 7 is a schematic flowchart of a communication method according to an embodiment of this application. As shown in FIG. 7, the method may include but is not limited to the following steps.

701: A first terminal device sends a first service request to a first access network device, where the first service request includes identification information of a first service type and is used to request a service of the first service type in a target first network node.

In this embodiment of this application, when there is a local service requirement on a RAN side, the first terminal device may send a corresponding service request to the first access network device, and may include corresponding service type information in the service request, to indicate a service type needed by the first terminal device. For example, when needing to obtain the service of the first service type (for example, a sensing service type), the first terminal device may send the first service request to the first access network device, and include the identification information of the first service type in the first service request. Correspondingly, the first access network device may receive the first service request from the first terminal device. The identification information of the first service type may be an identifier (ID) of the first service type, or may be a name of the first service type, or may be other information that can identify the first service type. This is not limited herein.

Optionally, the service request sent by the first terminal device to the first access network device may further carry other service-related information. For example, the first service request may further include one or more of the following: identification information of the target first network node, quality of service information, capability information of the first terminal device, service identification information, and the like. The identification information of the target first network node indicates that the target first network node needs to provide the service of the first service type. The quality of service information indicates quality of service to be met by the service of the first service type, for example, latency and bandwidth. The capability information of the first terminal device may indicate a capability of the first terminal device, for example, a computing capability, a supported sensing mode, and a transmit/receive capability (for example, an antenna quantity) of the first terminal device. The service identification information may be used to identify a current service request or identify a service process (for example, a service session) corresponding to the current service request, and may be a specific identifier (ID), for example, a service identifier or a service session identifier.

In some possible implementations, before sending the first service request to the first access network device, the first terminal device may first receive service configuration information from the first access network device. Then, the first terminal device may send the first service request to the first access network device based on the service configuration information. For example, the service configuration information may include identification information of one or more first network nodes, and the one or more first network nodes may include the target first network node. After receiving the service configuration information from the first access network device, the first terminal device may send the first service request to the first access network device based on the service configuration information. The first service request may carry the identification information of the target first network node. In some possible cases, the one or more first network nodes are one or more first network nodes associated with the first access network device. For example, there is a corresponding interface (for example, an Nx interface) between the one or more first network nodes and the first access network device.

Further, the identification information of the one or more first network nodes included in the service configuration information may respectively include identifiers of the one or more first network nodes and/or first address information of the one or more first network nodes. The first address information may be a uniform resource locator (uniform resource locator, URL), or may be transport network layer (transport network layer, TNL) information (for example, an IP address + a port number), or may be other address information that can identify the first network node.

Optionally, the service configuration information may further include information about one or more service types supported by each of the one or more first network nodes, and the information about the one or more service types may include identification information of the one or more service types. It should be understood that, in addition to the identification information of the one or more service types, the information about the one or more service types may further include other related information about the one or more service types, for example, description information of a corresponding service type.

It should be understood that after receiving the service configuration information from the first access network device, the first terminal device may select, based on a service requirement of the first terminal device, a first network node to provide a service for the first terminal device. For example, the service configuration information includes related service information of a network node 1, a network node 2, and a network node 3. Service types that can be provided by the network node 1 include a service type 1 and a service type 2. Service types that can be provided by the network node 2 include the service type 1, the service type 2, and a service type 3. Service types that can be provided by the network node 3 include the service type 1, the service type 2, and a service type 4. If the first terminal device currently needs a service corresponding to the service type 3, the first terminal device may determine that the network node 2 can provide the corresponding service, and may include identification information of the network node 2 in the service request sent to the first access network device.

It should be noted that a manner in which the first access network device obtains the service configuration information is not limited in embodiments of this application. The service configuration information may be obtained through interaction with the first network nodes, or may be directly preconfigured in the first access network device, or may be obtained in another possible manner.

702: The first access network device sends a second service request to the target first network node, where the second service request is used to request the service of the first service type in the target first network node.

After receiving the first service request from the first terminal device, the first access network device may send the second service request to the target first network node based on the first service request. Correspondingly, the target first network node may receive the second service request from the first access network device.

In some possible implementations, the first terminal device may include the identification information in the service request to indicate the first network node that needs to provide the service for the first terminal device. In this case, after receiving the service request from the first terminal device, the first access network device may send a service request to the first network node indicated by the identification information carried in the service request. For example, when the first service request includes the identification information of the target first network node, the first access network device may determine that the first terminal device needs the target first network node to provide the service for the first terminal device. Therefore, the first access network device may send the second service request to the target first network node based on the identification information of the target first network node. It should be understood that in some other possible implementations, after receiving the first service request, the first access network device may alternatively determine, based on related information (for example, the identification information of the first service type) carried in the first service request, a first network node as the target first network node.

In this embodiment of this application, a service corresponding to one service type may be provided by one corresponding NF in the first network node, or may be collaboratively provided by a plurality of corresponding NFs in the first network node. For example, a service corresponding to the sensing service type needs to be provided by using a sensing service in the first network node. A service corresponding to a three-dimensional map construction service type needs to be collaboratively provided by using the sensing service and a rendering service in the first network node. Therefore, in this embodiment of this application, one or more target services (target NFs) corresponding to the first service type need to be determined based on the identification information of the first service type, to subsequently request a service provided by the one or more target NFs. It may be understood that after receiving the first service request, the first access network device may determine, based on the identification information of the first service type, the one or more target NFs corresponding to the first service type, and then may send related information (for example, an identifier) about the determined one or more target NFs to the target first network node. Alternatively, the first access network device may send the identification information of the first service type to the target first network node, and the target first network node may determine, based on the identification information of the first service type, the one or more target NFs corresponding to the first service type. In other words, the first access network device may determine the one or more target NFs corresponding to the first service type, or the target first network node may determine the one or more target NFs corresponding to the first service type. In the two cases, information carried in the second service request may be different. The following separately provides examples for description.

When the target first network node determines the one or more target NFs corresponding to the first service type, the second service request may include the identification information of the first service type. When the first service request further includes one or more of the following: the quality of service information, the capability information of the first terminal device, and the service identification information, the second service request may further include one or more of the following: the quality of service information, the capability information of the first terminal device, and the service identification information. It may be understood that the second service request may include a part or all of information in the first service request.

It should be noted that the first access network device and the target first network node may perform communication (for example, transmit related control information/signaling) through the Nx interface. In this case, on the Nx interface, UE may be distinguished by using paired UE identifiers (for example, NxAP UE IDs), and specific UE to which an NxAP message corresponds may be identified by using a UE identifier carried in the message. For example, an identifier allocated by the first access network device to UE may be a first identifier (for example, a gNodeNxAP UE ID), and an identifier allocated by the target first network node to the UE may be a second identifier (for example, a NodeCNxAP UE ID). Based on this, the second service request may further include a first identifier of the first terminal device, and the first identifier of the first terminal device may be used to identify the first terminal device in the first access network device.

When the first access network device determines the one or more target NFs corresponding to the first service type, the second service request may include identification information of the one or more target NFs corresponding to the first service type. When the first service request further includes the quality of service information, the first access network device may determine, based on the quality of service information, quality of service corresponding to the one or more target NFs, and the second service request further includes the quality of service corresponding to the one or more target NFs. For example, the quality of service information carried in the first service request may indicate overall quality of service to be met, and the first access network device may determine, based on the quality of service information, quality of service to be met by each target NF. Optionally, the second service request may further include the capability information of the first terminal device or other related information. This is not limited herein.

It should be noted that, in some possible implementations, the first access network device may transparently transmit all/a part of information in the first service request to the target first network node. For example, for the first access network device, a part of information in the first service request may be invisible. For example, the part of information is encapsulated at an SM layer. In this case, the first access network device may transparently transmit the part of information in the first service request.

703: The target first network node sends a second service response to the first access network device, where the second service response includes first address information corresponding to the service of the first service type.

After receiving the second service request from the first access network device, the target first network node may perform corresponding processing based on the second service request, and then send the second service response to the first access network device. Correspondingly, the first access network device may receive the second service response from the target first network node. The second service response may include the first address information corresponding to the service of the first service type, and the first address information corresponding to the service of the first service type may include first address information of the one or more target NFs corresponding to the first service type.

In correspondence to the foregoing two cases of determining the one or more target NFs corresponding to the first service type, in one case, the second service request may include the identification information of the first service type, and the target first network node may determine, based on the identification information of the first service type, the one or more target NFs corresponding to the first service type. In addition, when the second service request further includes the quality of service information, the target first network node may further determine, based on the quality of service information, the quality of service corresponding to the one or more target NFs. In the other case, the second service request may directly include the identification information of the one or more target NFs corresponding to the first service type, and may further include the quality of service corresponding to the one or more target NFs. The target first network node may separately send a service request to the one or more target NFs corresponding to the first service type, and the service request may carry quality of service of a corresponding target NF. Correspondingly, the one or more target NFs corresponding to the first service type may separately return a service response. The service response may carry indication information, and the indication information may indicate confirmation/authorization of the service request, or may indicate a denial of the service request. It should be noted that the foregoing related descriptions of the service request sent by the target first network node to the NF and the service response sent by the NF to the target first network node are merely examples for description. This is not limited herein. For example, the service request sent by the target first network node to the NF and the service response sent by the NF to the target first network node may include more or less information. Even, in some cases, for different NFs, information carried in a service request sent by the target first network node to the NF and information carried in a service response sent by the NF to the target first network node are different.

Optionally, the second service response may further include one or more of the following: the first identifier of the first terminal device, a second identifier of the first terminal device, a service session identifier, tunnel information on a target first network node side, and information about a service data flow to be established. The second identifier of the first terminal device is used to identify the first terminal device in the target first network node. The service session identifier may be used to identify a corresponding service session, and may be the service identification information carried in the first service request. The tunnel information on the target first network node side may be related information about a GTP-U tunnel on the target first network node side, and may specifically include an IP address and a tunnel endpoint identifier (tunnel endpoint identifier, GTP-TEID) that are on the target first network node side. The information about the service data flow to be established may include IDs (service flow IDs) of one or more service data flows to be established and quality of service (QoS) of each of the one or more service data flows. The one or more service data flows may be used to carry service data corresponding to the first service type.

Optionally, the second service response may further include quality of service that can be ensured by the one or more target NFs corresponding to the first service type or air interface quality of service to be met on a first access network device side. For example, the target first network node may determine quality of service that can be internally ensured by the target first network node, namely, overall quality of service that can be ensured by the one or more target NFs corresponding to the first service type, and may include the quality of service in the second service response, to notify the first access network device of the quality of service. For another example, the target first network node may obtain, based on the quality of service information carried in the second service request and the determined quality of service that can be internally ensured by the target first network node, the air interface quality of service to be met on the first access network device side, and then may include the air interface quality of service in the second service response, to notify the first access network device of the air interface quality of service.

Optionally, the second service response may further include the identification information of the one or more target services corresponding to the first service type. The identification information of the one or more target services may be used to distinguish between related information about different target NFs in the second service response, for example, may be used to distinguish between the first address information of the one or more target services corresponding to the first service type.

In some possible implementations, when the second service request includes the capability information of the first terminal device, the target first network node may perform corresponding processing based on the capability information of the first terminal device. For example, if a service type requested by the first terminal device is a sensing service, the target first network node may select a sensing mode based on the capability information of the first terminal device, for example, a sensing mode that needs the terminal device to participate in calculation or a sensing mode that does not need the terminal device to participate in calculation. It should be understood that use of the capability information of the first terminal device herein is merely an example for description, and the use of the capability information of the first terminal device is not limited in embodiments of this application.

704: The first access network device sends a first service response to the first terminal device, where the first service response includes the first address information corresponding to the service of the first service type.

After receiving the second service response from the target first network node, the first access network device may send the first service response to the first terminal device based on the second service response. Correspondingly, the first terminal device may receive the first service response from the first access network device.

Optionally, the first service response may further include service identification information and/or a radio bearer (radio bearer, RB) configuration. In some possible implementations, the first access network device may perform resource allocation and traffic control based on quality of service, to ensure end-to-end quality of service. For example, the first access network device may configure a radio bearer of the first terminal device based on the quality of service that can be ensured by the one or more target NFs corresponding to the first service type or the air interface quality of service to be met on the first access network device side. In this way, end-to-end QoS requirements of services of different service types can be met. In a possible implementation, the first access network device may configure a corresponding radio bearer for the UE through RRC reconfiguration. It may be understood that the radio bearer configured by the first access network device for the first terminal device may be a data radio bearer (data radio bearer, DRB).

Optionally, the first service response may further include the identification information of the one or more target services corresponding to the first service type. The identification information of the one or more target services may be used to distinguish between related information about different target NFs in the first service response, for example, may be used to distinguish between the first address information of the one or more target services corresponding to the first service type.

It may be understood that the first access network device may associate the established DRB with the service data flow, for example, establish a mapping relationship between the DRB and the service data flow.

705: The first access network device sends a third service response to the target first network node.

After receiving the second service response from the target first network node, the first access network device may perform corresponding processing based on the second service response, and then send the third service response to the target first network node. Correspondingly, the target first network node may receive the third service response from the first access network device.

The third service response may include one or more of the following: the first identifier of the first terminal device, the second identifier of the first terminal device, the service session identifier, tunnel information on the first access network device side, and information about a service data flow that is not successfully established. The tunnel information on the first access network device side may be related information about a GTP-U tunnel on the first access network device side, and may specifically include an IP address and a GTP-TEID that are on the first access network device side. The information about the service data flow that is not successfully established may indicate one or more service data flows that are not successfully established by the first access network device, for example, may include IDs of the one or more service data flows that are not successfully established. It should be understood that a data transmission tunnel, for example, the GTP-U tunnel, between the first access network device and the target first network node may be established based on the tunnel information on the first access network device side and the tunnel information on the target first network side, and may be used for data transmission.

It should be noted that an execution sequence of step 704 and step 705 is not specifically limited in embodiments of this application. In some cases, step 704 may be performed before step 705. In some other cases, step 705 may be performed before step 704. In still some other cases, step 704 and step 705 may be simultaneously performed. It should be further noted that step 705 is optional, and in some cases, step 705 may not be performed.

706: The first terminal device transmits, based on the first address information corresponding to the service of the first service type, service data corresponding to the first service type to the target first network node via the first access network device.

After receiving the first service response from the first access network device, the first terminal device may transmit, based on the first address information corresponding to the service of the first service type, the service data corresponding to the first service type to the target first network node via the first access network device.

For example, a radio bearer may be established between the first terminal device and the first access network device, and the first terminal device and the first access network device may transmit, via the corresponding radio bearer, the service data corresponding to the first service type. A data transmission tunnel may be established between the first access network device and the target first network node, and the first access network device and the target first network node may transmit, through the corresponding data transmission tunnel, the service data corresponding to the first service type. For another example, the first terminal device and the first access network device may transmit, via a corresponding radio bearer, the service data corresponding to the first service type, and the first access network device and the target first network node may transmit, by using an HTTP(s) protocol, an IP protocol, and the like, the service data corresponding to the first service type.

It may be understood that, because the target service provides a service-based interface externally, the first terminal device and the target NF may transmit, by using the HTTP(s) protocol, the service data corresponding to the first service type. In other words, the first terminal device may send the service data to the corresponding target service based on the first address information corresponding to the service of the first service type.

In the foregoing processing procedure, when needing to obtain the service provided by the first network node, the first terminal device may request the corresponding service from the target first network node via the first access network device. Then, the first address information corresponding to the service of the first service type may be returned to the first terminal device, and the corresponding radio bearer and/or data transmission tunnel may be established for the first terminal device, so that end-to-end service data transmission between the first terminal device and the target first network node can be implemented. In addition, each node (for example, the first access network device), each target NF, and the like in a network may perform corresponding processing (for example, resource allocation and traffic control) based on corresponding QoS, so that end-to-end quality of service can be ensured.

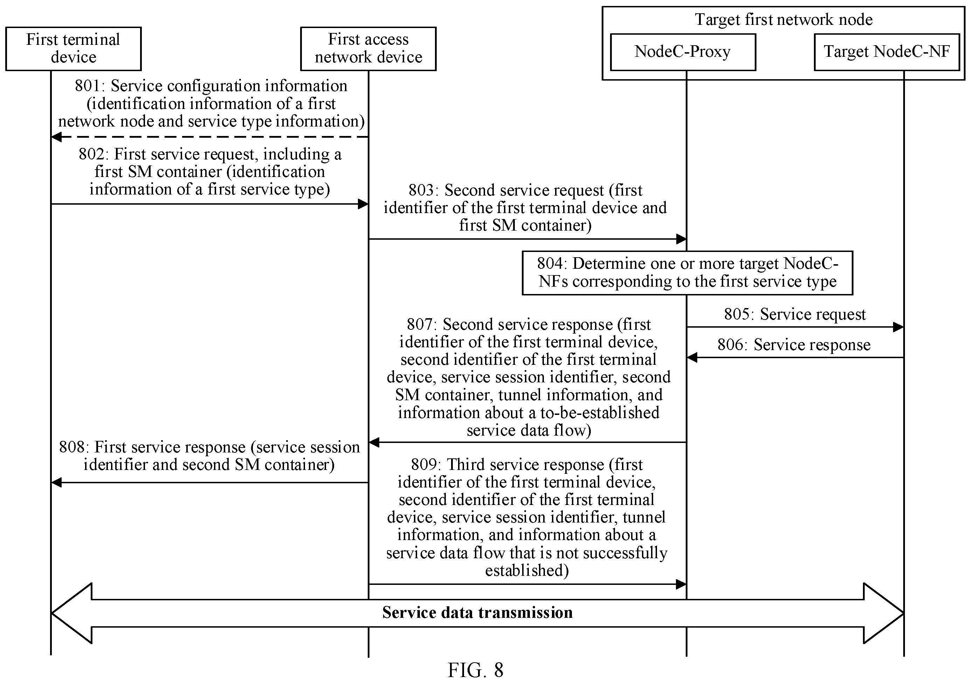

The following describes the communication method shown in FIG. 7 by using an example in which a control plane uses the protocol stack shown in FIG. 3 and a data plane uses the protocol stack shown in FIG. 4. In this case, in some possible implementations, control information/signaling between the first terminal device and the first access network device may be transmitted via an RRC layer, control information/signaling between the first access network device and the target first network node may be transmitted via an NxAP layer, and control information/signaling between the first terminal device and the target first network node may be transmitted via an SM layer. For details, refer to FIG. 8. FIG. 8 is an example of the communication method shown in FIG. 7. As shown in FIG. 8, a processing procedure may include but is not limited to the following steps.

801: A first access network device sends service configuration information to a first terminal device.

In some possible implementations, to facilitate obtaining, by the first terminal device, a service provided by a first network node, the first access network device may send the service configuration information to the first terminal device. Correspondingly, the first terminal device may receive the service configuration information from the first access network device. The service configuration information may include identification information (for example, a list) of one or more first network nodes, and the one or more first network nodes each may be a first network node that has an Nx interface with the first access network device. For example, the identification information of the first network node may be an identifier of the first network node, or may be TNL information (for example, a URL) of the first network node, or may be other information that can identify the first network node. This is not limited herein.

Optionally, the service configuration information may further include information about a service type (for example, a service type like sensing, positioning, AI, or three-dimensional map construction) supported by each first network node.

It may be understood that, after obtaining the service configuration information, the first terminal device may include the identification information of the first network node in a service request that is subsequently sent, to specify a first network node that needs to provide a service. Further, the first terminal device may select, based on a service requirement of the first terminal device and the service type supported by each first network node, an appropriate first network node to initiate the service request.

It should be noted that step 801 is optional. For example, in some possible implementations, the first access network device may randomly select the first network node that provides the corresponding service for the first terminal device, or the first access network device may select, based on the service requirement (for example, a service type) of the first terminal device, the first network node that provides the corresponding service for the first terminal device.

802: The first terminal device sends a first service request to the first access network device.

When there is a local service requirement on a RAN side, the first terminal device may send the first service request to the first access network device. Correspondingly, the first access network device may receive the first service request from the first terminal device. The first service request may include a first SM container (SM container), and the first SM container may include identification information of a service type (for example, identification information of a first service type), to indicate a service type needed by the first terminal device. It may be understood that the first SM container may be carried at an SM layer, and is invisible to the first access network device. The first access network device may perform transparent transmission.

Optionally, the first service request may further include the identification information of the first network node, to indicate a specific first network node to provide the corresponding service. For example, when a target first network node needs to provide the corresponding service, the first service request may carry identification information of the target first network node.

Optionally, the first SM container may further include one or more of the following: quality of service information, capability information of the first terminal device, a service session identifier, and the like.

For example, the first service request may be carried in an RRC message.

803: The first access network device sends a second service request to a NodeC-Proxy of the target first network node.

After receiving the first service request from the first terminal device, the first access network device may send the second service request to the NodeC-Proxy of the target first network node through a corresponding Nx interface. Correspondingly, the NodeC-Proxy of the target first network node may receive the second service request from the first access network device. The second service request may include the first SM container and a first identifier of the first terminal device, and the first identifier of the first terminal device may be used to identify the first terminal device in the first access network device.

It may be understood that, when the first service request includes the identification information of the target first network node, the first access network device may determine that the target first network node needs to provide the corresponding service, may forward the first SM container through the corresponding Nx interface, and may include the first identifier of the first terminal device.

804: The NodeC-Proxy of the target first network node determines one or more target NodeC-NFs corresponding to the first service type.

After receiving the second service request from the first access network device, the NodeC-Proxy of the target first network node may parse the first SM container in the second service request to obtain the identification information of the first service type. Then, the NodeC-Proxy of the target first network node may determine, based on the identification information of the first service type, that the first terminal device needs to obtain a service of the first service type, and may determine the one or more target NodeC-NFs corresponding to the first service type.

Optionally, when the first SM container includes the quality of service information, the NodeC-Proxy of the target first network node may determine, based on the quality of service information, quality of service (a QoS requirement) to be guaranteed on each target NodeC-NF.

805: The NodeC-Proxy of the target first network node sends a service request to the target NodeC-NF.

After determining the one or more target NodeC-NFs corresponding to the first service type, the NodeC-Proxy of the target first network node may separately send a service request to each target NodeC-NF of the target first network node. The service request is used to request a corresponding target service, namely, a service provided by the target NodeC-NF. Correspondingly, the target NodeC-NFs of the target first network node may separately receive the service request from the NodeC-Proxy.

Optionally, the service request sent by the NodeC-Proxy of the target first network node to each target NodeC-NF of the target first network node may separately carry quality of service to be guaranteed by the corresponding target NodeC-NF.

806: The target NodeC-NF of the target first network node sends a service response to the NodeC-Proxy.

After receiving the service request from the NodeC-Proxy, each target NodeC-NF of the target first network node may perform corresponding processing based on the service request, and then feed back the service response to the NodeC-Proxy of the target first network node. Correspondingly, the NodeC-Proxy of the target first network node may receive the service response from each target NodeC-NF.

For example, when the service request includes the quality of service to be guaranteed, each target NodeC-NF may determine whether the target NodeC-NF can ensure the corresponding quality of service. If the target NodeC-NF can ensure the corresponding quality of service, the target NodeC-NF may include a confirmation indication in the service response, to indicate that the target NodeC-NF can ensure the corresponding quality of service. Otherwise, if the target NodeC-NF cannot ensure the corresponding quality of service, the target NodeC-NF may include a rejection indication in the service response, to indicate that the target NodeC-NF cannot ensure the corresponding quality of service.

807: The NodeC-Proxy of the target first network node sends a second service response to the first access network device.

After receiving the service response from each target NodeC-NF, the NodeC-Proxy of the target first network node may send the second service response to the first access network device. Correspondingly, the first access network device may receive the second service response from the NodeC-Proxy of the target first network node. The second service response may include one or more of the following: the first identifier of the first terminal device, a second identifier of the first terminal device, the service session identifier, a second SM container, tunnel information, and information about a to-be-established service data flow. The second identifier of the first terminal device may be used to identify the first terminal device in the target first network node. The service session (service session) identifier may be used to identify a corresponding service session, for example, a service session to be established. The second SM container may include first address information corresponding to the service of the first service type, and may specifically include TNL information or a URL of a NodeC-NF (for example, the one or more target NodeC-NFs corresponding to the first service type) needed by the service of the first service type. The tunnel information in the second service response may be related information about a GTP-U tunnel on a target first network node side, and may specifically include an IP address and a GTP-TEID that are on the target first network node side. The information about the to-be-established service data flow may include IDs of one or more service data flows to be established and quality of service (QoS) of each of the one or more service data flows. The one or more service data flows may be used to carry service data corresponding to the first service type.

Optionally, the second service response may further include quality of service that can be ensured by the one or more target NFs corresponding to the first service type or air interface quality of service to be met on a first access network device side.

It may be understood that the second SM container may be carried at the SM layer, and is invisible to the first access network device. The first access network device may perform transparent transmission.

In some possible implementations, the second service response may be a service session resource establishment request.

It should be noted that the second service response may carry a plurality of service session identifiers, in other words, a plurality of service sessions need to be established, and each service session may include one or more service data flows. The plurality of service sessions each may be used to carry the service data corresponding to the first service type. For example, the first service type corresponds to a plurality of target NodeC-NFs, and service data corresponding to each target NodeC-NF may be carried in a specific service session.

808: The first access network device sends a first service response to the first terminal device.

After receiving the second service response from the NodeC-Proxy of the target first network node, the first access network device may send the first service response to the first terminal device based on the second service response. Correspondingly, the first terminal device may receive the first service response from the first access network device. The first service response may include the service session identifier and the second SM container. For example, the service session identifier in the first service response may be a service session identifier accepted by the first access network device or an identifier corresponding to a successfully established service session.

The first access network device may further configure (establish) a radio bearer for the first terminal device. For example, the first access network device may configure the radio bearer for the first terminal device based on the quality of service that can be ensured by the one or more target NFs corresponding to the first service type or the air interface quality of service to be met on the first access network device side. In a possible implementation, the first access network device may configure an air interface service bearer for the first terminal device through RRC reconfiguration. It may be understood that, in some possible implementations, the first access network device may further configure a mapping relationship between the radio bearer and the service data flow. For example, the first access network device may configure a DRB for the first terminal device.

It may be understood that, in this embodiment of this application, a QoS rule (rule) corresponding to the service data flow may be further configured for the terminal device, a related QoS configuration corresponding to the data flow may be further configured for the first access network device, and the QoS rule corresponding to the service data flow may be further configured for the target first network node (for example, the NodeC-Proxy). The QoS rule may include a packet filter set (packet filter set), the packet filter set may include a plurality of packet filters (packet filters), and each packet filter may be downlink, uplink, or bidirectional. In this way, service data packets may be mapped to different service data flows for transmission, to meet different quality of service requirements. For example, the QoS rule, the QoS configuration, and the like may be allocated by an SMF or another network element.

809: The first access network device sends a third service response to the NodeC-Proxy of the target first network node.

After receiving the second service response from the NodeC-Proxy of the target first network node, the first access network device may perform corresponding processing, and then send the third service response to the NodeC-Proxy of the target first network node. The third service response may include one or more of the following: the first identifier of the first terminal device, the second identifier of the first terminal device, the service session identifier, tunnel information, and information about a service data flow that is not successfully established. The tunnel information in the third service response may be related information about a GTP-U tunnel on the first access network device side, and may specifically include an IP address and a GTP-TEID that are on the target first access network device side. The information about the service data flow that is not successfully established may include IDs of one or more service data flows that are not successfully established.

For example, the service session identifier in the third service response may be a service session identifier accepted by the first access network device or an identifier corresponding to a successfully established service session. Correspondingly, the information about the service data flow that is not successfully established may be information corresponding to a service data flow that is not successfully established in each successfully established service session.

In some possible implementations, the third service response may be a service session establishment response.

It should be noted that, through steps 802 to 806, the data radio bearer (DRB) may be established between the first access network device and the first terminal device, and the GTP-U tunnel may be established between the first access network device and the NodeC-Proxy of the target first network node, so that service data transmission between the first terminal device and the NodeC-Proxy of the target first network node can be implemented. Finally, service data transmission to the target NodeC-NF may be implemented via the NodeC-Proxy of the target first network node.

FIG. 8 shows an example of a service data transmission procedure triggered by a terminal device based on a dedicated interface, so that service data transmission between a local service on the RAN side and the terminal device can be implemented. In addition, each node (for example, the first access network device), each target NF, and the like may perform corresponding processing (for example, resource allocation and traffic control) based on corresponding QoS, so that end-to-end quality of service can be ensured.

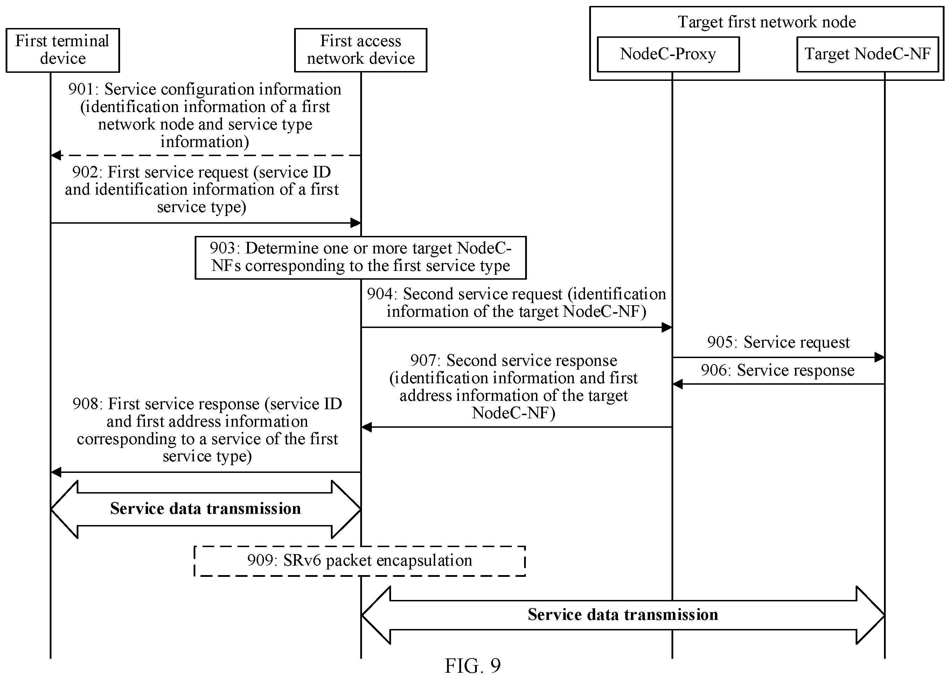

The following describes the communication method shown in FIG. 7 by using an example in which a control plane uses the protocol stack shown in FIG. 5, a data plane uses the protocol stack shown in FIG. 6, and the first access network device includes an HTTP(s) layer. In this case, in some possible implementations, control information/signaling between the first terminal device and the first access network device may be transmitted via the HTTP(s) layer, and control information/signaling between the first access network device and the target first network node may also be transmitted via the HTTP(s) layer. For details, refer to FIG. 9. FIG. 9 is an example of the communication method shown in FIG. 7. As shown in FIG. 9, a processing procedure may include but is not limited to the following steps.

901: A first access network device sends service configuration information to a first terminal device.

Step 901 is similar to step 801. For details, refer to related descriptions in step 801. Details are not described herein again.

It may be understood that step 901 is optional.

902: The first terminal device sends a first service request to the first access network device.

When there is a local service requirement on a RAN side, the first terminal device may send the first service request to the first access network device. Correspondingly, the first access network device may receive the first service request from the first terminal device. The first service request may include identification information of a service type (for example, identification information of a first service type), to indicate a service type needed by the first terminal device. The first service request may further include a service ID, and the service ID may identify a currently requested service or identify the first service request.

Optionally, the first service request may further include identification information of a first network node, to indicate a specific first network node to provide a corresponding service. For example, when a target first network node needs to provide the corresponding service, the first service request may carry identification information of the target first network node.

Optionally, a first SM container may further include one or more of the following: quality of service information, capability information of the first terminal device, and the like.

For example, the first service request may be carried in an HTTP request.

903: The first access network device determines one or more target NodeC-NFs corresponding to the first service type.

After receiving the first service request from the first terminal device, the first access network device may determine, based on the identification information of the first service type, that the first terminal device needs to obtain a service of the first service type, and may determine the one or more target NodeC-NFs corresponding to the first service type.

Optionally, when the first service request includes the quality of service information, the first access network device may further determine, based on the quality of service information, quality of service (a QoS requirement) to be guaranteed on each target NodeC-NF.

In some possible implementations, when the first service type corresponds to a plurality of target NodeC-NFs, it indicates that the service (for example, a three-dimensional map construction service) of the first service type may be completed through combination (collaboration) of the plurality of NFs, and the first access network device may further determine a corresponding service path, namely, a processing sequence of the plurality of NodeC-NFs. For example, it is assumed that three target NodeC-NFs are included: an NF_1, an NF_2, and an NF_3, and the service path may be NF_1---->NF_3---->NF_2.

904: The first access network device sends a second service request to a NodeC-Proxy of the target first network node.

After determining the one or more target NodeC-NFs corresponding to the first service type, the first access network device may send the second service request to the NodeC-Proxy of the target first network node. Correspondingly, the NodeC-Proxy of the target first network node may receive the second service request from the first access network device. The second service request may include identification information of the target NodeC-NF, namely, identification information of the one or more target NodeC-NFs determined by the first access network device.

Optionally, when the first service request includes the quality of service information, the first access network device may determine, based on the quality of service information, the quality of service (the QoS requirement) to be guaranteed on each target NodeC-NF, and may include, in the second service request, the quality of service to be guaranteed on each target NodeC-NF.

It may be understood that when the first service request includes the identification information of the target first network node, the first access network device may determine, based on the identification information of the first network node, that the target first network node needs to provide the corresponding service, and may send the second service request to the NodeC-Proxy of the target first network node.

905: The NodeC-Proxy of the target first network node sends a service request to the target NodeC-NF.

After receiving the second service request from the first access network device, the NodeC-Proxy of the target first network node may separately send a service request to each target NodeC-NF of the target first network node based on the second service request.

Optionally, the service request sent by the NodeC-Proxy of the target first network node to each target NodeC-NF of the target first network node may separately carry quality of service to be guaranteed by the corresponding target NodeC-NF.

906: The target NodeC-NF of the target first network node sends a service response to the NodeC-Proxy.

Step 906 is similar to step 806. For details, refer to related descriptions in step 806. Details are not described herein again.

907: The NodeC-Proxy of the target first network node sends a second service response to the first access network device.

After receiving the service response from each target NodeC-NF, the NodeC-Proxy of the target first network node may send the second service response to the first access network device. Correspondingly, the first access network device may receive the second service response from the NodeC-Proxy of the target first network node. The second service response may include the identification information of each target NodeC-NF and first address information of each target NodeC-NF.

Optionally, the second service response may further include quality of service that can be ensured by the one or more target NFs corresponding to the first service type or air interface quality of service to be met on a first access network device side.

It may be understood that an HTTP(s) protocol may be a request/response mechanism. To be specific, a client sends a request to a server, and the server returns a response to the client.

908: The first access network device sends a first service response to the first terminal device.

After receiving the second service response from the NodeC-Proxy of the target first network node, the first access network device may send the first service response to the first terminal device based on the second service response. Correspondingly, the first terminal device may receive the first service response from the first access network device. The first service response may include a service ID and first address information corresponding to the service of the first service type. The first address information corresponding to the service of the first service type may include the first address information of the one or more target NodeC-NFs corresponding to the first service type. For example, the service ID in the first service response may be the same as the service ID in the first service request, and the first access network device may determine, based on the service ID in the first service response, that the first service response is a service response corresponding to the first service request.

It should be understood that the first access network device may further configure (establish) a radio bearer for the first terminal device. For example, the first access network device may configure the radio bearer for the first terminal device based on the quality of service that can be ensured by the one or more target NFs corresponding to the first service type or the air interface quality of service to be met on the first access network device side. In a possible implementation, the first access network device may configure an air interface service bearer for the first terminal device through RRC reconfiguration. For example, the first access network device may configure a DRB for the first terminal device.

909: The first access network device performs SRv6 packet encapsulation.

After receiving the first service response from the first access network device, the first terminal device may transmit, based on the first address information corresponding to the service of the first service type, service data corresponding to the first service type to the target first network node via the first access network device.

It may be understood that the first terminal device may send, to the first access network device via the established radio bearer, the service data corresponding to the first service type. When a network layer is based on SRv6, after receiving the service data corresponding to the first service type from the first terminal device, the first access network device may perform SRv6 packet encapsulation. For example, the first access network device may include, in an SRH field of an SRv6 packet, information such as a service path (for example, the service path determined in step 903), a QoS requirement on each target NodeC-NF, and a data operation to be performed on each target NodeC-NF. Then, the first access network device may send an encapsulated SRv6 packet to the NodeC-Proxy of the target first network node. Correspondingly, the NodeC-Proxy of the target first network node may receive the SRv6 packet from the first access network device, and then the NodeC-Proxy of the target first network node may send a corresponding SRv6 packet to the target NodeC-NF based on the SRv6 packet, to implement service data transmission to the target NodeC-NF.

It may be understood that step 909 is optional, and may be performed only when the network layer is based on SRv6.

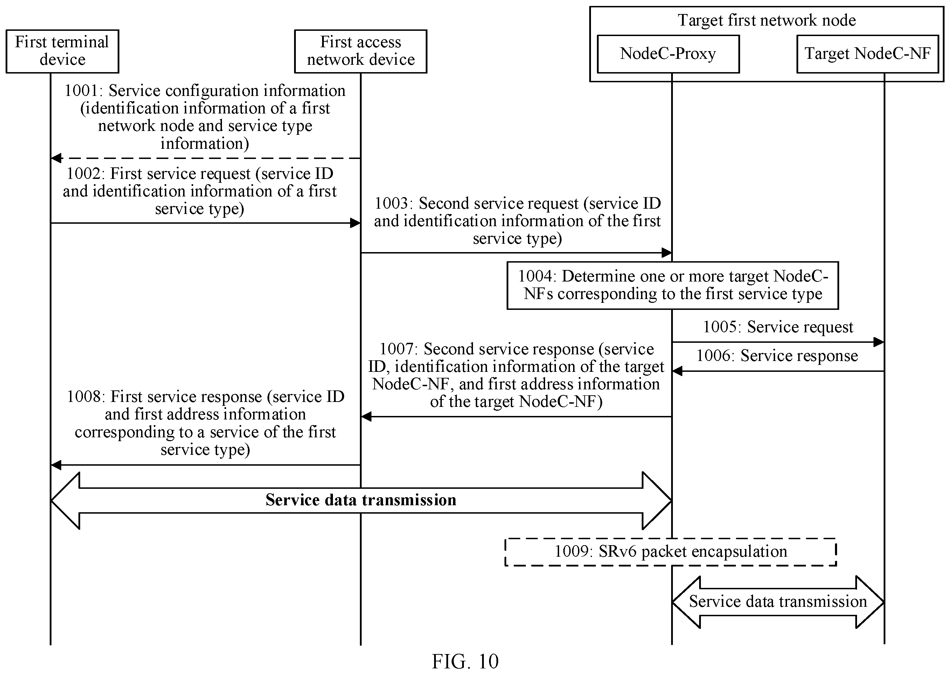

The following describes the communication method shown in FIG. 7 by using an example in which a control plane uses the protocol stack shown in FIG. 5, a data plane uses the protocol stack shown in FIG. 6, and the first access network device does not include an HTTP(s) layer. In this case, in some possible implementations, control information/signaling between the first terminal device and the first access network device may be transmitted via an RRC layer, control information/signaling between the first access network device and the target first network node may be transmitted via an NxAP layer, and control information/signaling between the first access network device and the target first network node may be transmitted via the HTTP(s) layer. For details, refer to FIG. 10. FIG. 10 is an example of the communication method shown in FIG. 7. As shown in FIG. 10, a processing procedure may include but is not limited to the following steps.

1001: A first access network device sends service configuration information to a first terminal device.

Step 1001 is similar to step 801. For details, refer to related descriptions in step 801. Details are not described herein again.

It may be understood that step 1001 is optional.

1002: The first terminal device sends a first service request to the first access network device.

Step 1002 is similar to step 902. For details, refer to related descriptions in step 902. Details are not described herein again.

1003: The first access network device sends a second service request to a NodeC-Proxy of a target first network node.

After receiving the first service request from the first terminal device, the first access network device may send the second service request to the NodeC-Proxy of the target first network node based on the first service request. Correspondingly, the NodeC-Proxy of the target first network node may receive the second service request from the first access network device. The second service request may include a service ID and identification information of a first service type. Optionally, the second service request may further include quality of service information.

It may be understood that when the first service request includes identification information of the target first network node, the first access network device may determine, based on the identification information of the first network node, that the target first network node needs to provide a corresponding service, and may send the second service request to the NodeC-Proxy of the target first network node.

1004: The NodeC-Proxy of the target first network node determines one or more target NodeC-NFs corresponding to the first service type.

After receiving the second service request from the first access network device, the NodeC-Proxy of the target first network node may determine, based on the identification information of the first service type, that the first terminal device needs to obtain a service of the first service type, and may determine the one or more target NodeC-NFs corresponding to the first service type.

Optionally, when the second service request includes the quality of service information, the NodeC-Proxy of the target first network node may further determine, based on the quality of service information, quality of service (a QoS requirement) to be guaranteed on each target NodeC-NF.

In some possible implementations, when the first service type corresponds to a plurality of target NodeC-NFs, it indicates that the service (for example, a three-dimensional map construction service) of the first service type may be completed through combination (collaboration) of the plurality of NFs, and the first access network device may further determine a corresponding service path, namely, a processing sequence of the plurality of NodeC-NFs.

1005: The NodeC-Proxy of the target first network node sends a service request to the target NodeC-NF.

After determining the one or more target NodeC-NFs corresponding to the first service type, the NodeC-Proxy of the target first network node may separately send the service request to each target NodeC-NF of the target first network node.

Optionally, the service request sent by the NodeC-Proxy of the target first network node to each target NodeC-NF of the target first network node may separately carry quality of service to be guaranteed by the corresponding target NodeC-NF.

1006: The target NodeC-NF of the target first network node sends a service response to the NodeC-Proxy.

Step 1006 is similar to step 806. For details, refer to related descriptions in step 806. Details are not described herein again.

1007: The NodeC-Proxy of the target first network node sends a second service response to the first access network device.

Step 1007 is similar to step 907. For details, refer to related descriptions in step 907. Details are not described herein again.

1008: The first access network device sends a first service response to the first terminal device.

Step 1008 is similar to step 908. For details, refer to related descriptions in step 908. Details are not described herein again.

1009: The target first network node performs SRv6 packet encapsulation.

After receiving the first service response from the first access network device, the first terminal device may transmit, based on first address information corresponding to the service of the first service type, service data corresponding to the first service type to the target first network node via the first access network device.

It may be understood that the first terminal device may send, to the first access network device via an established radio bearer, the service data corresponding to the first service type. The first access network device may send the service data corresponding to the first service type to the NodeC-Proxy of the target first network node. When a network layer is based on SRv6, after receiving the service data corresponding to the first service type from the first access network device, the NodeC-Proxy of the target first network node may perform SRv6 packet encapsulation, and modify an SRH field of an SRv6 packet. For example, the NodeC-Proxy of the target first network node may include, in the SRH field of the SRv6 packet, information such as a service path (for example, the service path determined in step 1003), the QoS requirement on each target NodeC-NF, and a data operation to be performed on each target NodeC-NF. Then, the NodeC-Proxy of the target first network node may send a corresponding SRv6 packet to the target NodeC-NF, to implement service data transmission to the target NodeC-NF.

It may be understood that step 1009 is optional, and may be performed only when the network layer is based on SRv6.

FIG. 9 and FIG. 10 each show an example of a service data transmission procedure triggered by a terminal device based on a universal service-based interface, so that service data transmission between a local service on the RAN side and the terminal device can be implemented. In addition, each node (for example, the first access network device), each target NF, and the like may perform corresponding processing (for example, resource allocation and traffic control) based on corresponding QoS, so that end-to-end quality of service can be ensured. In addition, a packet forwarding path and the like may be further planned by using the SRH field in the SRv6 packet, to enable flexible traffic optimization.

It should be noted that, for related information (namely, same information or similar information) and related descriptions in the foregoing different embodiments, reference may be made to each other.

The foregoing mainly describes the communication method provided in embodiments of this application. It may be understood that, to implement the foregoing corresponding functions, the first terminal device, the first access network device, and the target first network node may include corresponding hardware structures and/or software modules for performing the functions. With reference to example units and steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the first terminal device, the first access network device, the target first network node, and the like may be divided into functional modules based on the foregoing method examples. For example, each functional module may be obtained through division based on each corresponding function, or two or more functions may be integrated into one module. The integrated module may be implemented in a form of hardware, or may be implemented in a form of a software functional module. It should be noted that, in embodiments of this application, division into the modules is an example and is merely logical function division, and may be other division in an actual implementation.

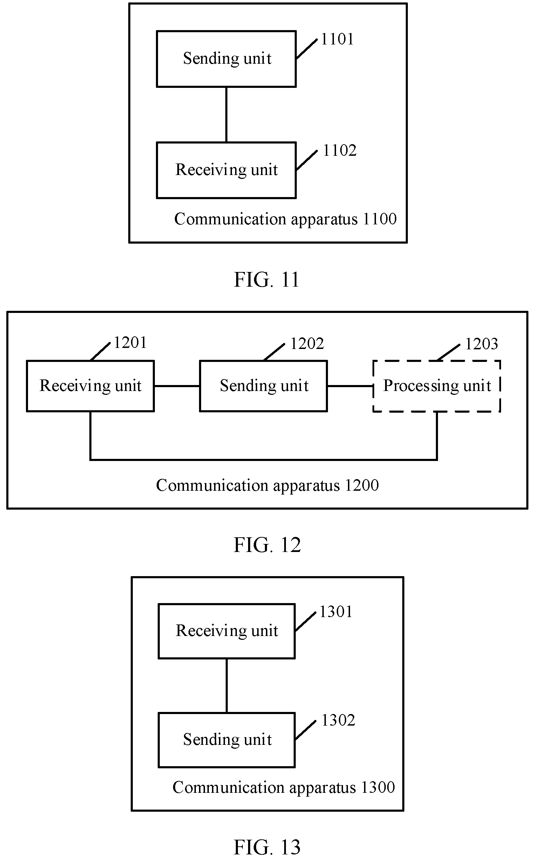

When each functional module is obtained through division based on each corresponding function, FIG. 11 is a diagram of a possible structure of a communication apparatus 1100. The communication apparatus 1100 includes a sending unit 1101 and a receiving unit 1102.

In a possible design, the communication apparatus 1100 may be the foregoing first terminal device, or may be a chip in the first terminal device, or may be a processing system in the first terminal device, or the like.

The sending unit 1101 is configured to send a first service request to a first access network device, where the first service request includes identification information of a first service type, and the first service request is used to request a service of the first service type in a target first network node.

The receiving unit 1102 is configured to receive a first service response from the first access network device, where the first service response includes first address information corresponding to the service of the first service type.

The sending unit 1101 is further configured to transmit, based on the first address information corresponding to the service of the first service type, service data corresponding to the first service type to the target first network node via the first access network device.

In a possible implementation, the first service request further includes one or more of the following: identification information of the target first network node, quality of service information, capability information of the first terminal device, and service identification information.

In a possible implementation, the first service response further includes service identification information and/or a radio bearer configuration.

In a possible implementation, before the sending unit 1101 sends the first service request to the first access network device, the receiving unit 1102 is further configured to receive service configuration information from the first access network device, where the service configuration information includes identification information of one or more first network nodes, and the one or more first network nodes include the target first network node.

In a possible implementation, the identification information of the one or more first network nodes includes identifiers of the one or more first network nodes and/or first address information of the one or more first network nodes.

In a possible implementation, the service configuration information further includes information about one or more service types supported by each of the one or more first network nodes, and the information about the one or more service types includes identification information of the one or more service types.

In a possible implementation, the first address information corresponding to the service of the first service type includes first address information of one or more target services corresponding to the first service type, and the first service response further includes identification information of the one or more target services.

For specific operations of the units in the communication apparatus 1100, refer to descriptions corresponding to the first terminal device or the modules in the first terminal device in the foregoing method embodiments. Details are not described herein again.

FIG. 12 is a diagram of a possible structure of a communication apparatus 1200. The communication apparatus 1200 includes a receiving unit 1201 and a sending unit 1202. The communication apparatus 1200 may further include a processing unit 1203.

In a possible design, the communication apparatus 1200 may be the foregoing first access network device, or may be a chip in the first access network device, or may be a processing system in the first access network device, or the like.

The receiving unit 1201 is configured to receive a first service request from a first terminal device, where the first service request includes identification information of a first service type, and the first service request is used to request a service of the first service type in a target first network node.

The sending unit 1202 is configured to send a first service response to the first terminal device, where the first service response includes first address information corresponding to the service of the first service type.

In a possible implementation, before the sending unit 1202 sends the first service response to the first terminal device, the sending unit 1202 is further configured to send a second service request to the target first network node based on the first service request, where the second service request is used to request the service of the first service type in the target first network node; and the receiving unit 1201 is further configured to receive a second service response from the target first network node, where the second service response includes the first address information corresponding to the service of the first service type.

In a possible implementation, the first service request further includes identification information of the target first network node, and the sending unit 1202 is specifically configured to send the second service request to the target first network node based on the identification information of the target first network node.

In a possible implementation, the second service request includes the identification information of the first service type.

In a possible implementation, the first service request further includes one or more of the following: quality of service information, capability information of the first terminal device, and service identification information; and the second service request further includes one or more of the following: the quality of service information, the capability information of the first terminal device, and the service identification information.

In a possible implementation, the second service request further includes a first identifier of the first terminal device, and the first identifier of the first terminal device is used to identify the first terminal device in the first access network device.

In a possible implementation, the second service response further includes one or more of the following: the first identifier of the first terminal device, a second identifier of the first terminal device, a service session identifier, tunnel information on a target first network node side, and information about a service data flow to be established, and the second identifier of the first terminal device is used to identify the first terminal device in the target first network node.

In a possible implementation, the sending unit 1202 is further configured to send a third service response to the target first network node, where the third service response includes one or more of the following: the first identifier of the first terminal device, the second identifier of the first terminal device, the service session identifier, tunnel information on a first access network device side, and information about a service data flow that is not successfully established.

In a possible implementation, the second service request includes identification information of one or more target services corresponding to the first service type.

In a possible implementation, the first service request further includes quality of service information, and the apparatus further includes the processing unit 1203, configured to determine, based on the quality of service information, quality of service corresponding to the one or more target services, where the second service request further includes the quality of service corresponding to the one or more target services.

In a possible implementation, the second service response further includes quality of service that can be ensured by the one or more target services corresponding to the first service type, or air interface quality of service to be met on the first access network device side.

In a possible implementation, the first address information corresponding to the service of the first service type includes first address information of the one or more target services corresponding to the first service type, and the second service response further includes the identification information of the one or more target services.

In a possible implementation, the first service response further includes service identification information and/or a radio bearer configuration.

In a possible implementation, before the receiving unit 1201 receives the first service request from the first terminal device, the sending unit 1202 is further configured to send service configuration information to the first terminal device, where the service configuration information includes identification information of one or more first network nodes, and the one or more first network nodes include the target first network node.

In a possible implementation, the identification information of the one or more first network nodes includes identifiers of the one or more first network nodes and/or first address information of the one or more first network nodes.

In a possible implementation, the service configuration information further includes information about one or more service types supported by each of the one or more first network nodes, and the information about the one or more service types includes identification information of the one or more service types.

For specific operations of the units in the communication apparatus 1200, refer to descriptions corresponding to the first access network device or the modules in the first access network device in the foregoing method embodiments. Details are not described herein again.

FIG. 13 is a diagram of a possible structure of a communication apparatus 1300. The communication apparatus 1300 includes a receiving unit 1301 and a sending unit 1302.

In a possible design, the communication apparatus 1300 may be the foregoing target first network node, or may be a chip in the target first network node, or may be a processing system in the target first network node, or the like.

The receiving unit 1301 is configured to receive a second service request from a first access network device, where the second service request is used to request a service of a first service type in the target first network node.

The sending unit 1302 is configured to send a second service response to the first access network device, where the second service response includes first address information corresponding to the service of the first service type.

In a possible implementation, the second service request includes identification information of the first service type.

In a possible implementation, the second service request further includes one or more of the following: quality of service information, capability information of a first terminal device, and service identification information.

In a possible implementation, the second service request further includes a first identifier of the first terminal device, and the first identifier of the first terminal device is used to identify the first terminal device in the first access network device.

In a possible implementation, the second service response further includes one or more of the following: the first identifier of the first terminal device, a second identifier of the first terminal device, a service session identifier, tunnel information on a target first network node side, and information about a service data flow to be established, and the second identifier of the first terminal device is used to identify the first terminal device in the target first network node.

In a possible implementation, the receiving unit 1301 is further configured to receive a third service response from the first access network device, where the third service response includes one or more of the following: the first identifier of the first terminal device, the second identifier of the first terminal device, the service session identifier, tunnel information on a first access network device side, and information about a service data flow that is not successfully established.

In a possible implementation, the second service request includes identification information of one or more target services corresponding to the first service type.

In a possible implementation, the second service request further includes quality of service corresponding to the one or more target services.

In a possible implementation, the second service response further includes quality of service that can be ensured by the one or more target services corresponding to the first service type, or air interface quality of service to be met on the first access network device side.

In a possible implementation, the first address information corresponding to the service of the first service type includes first address information of the one or more target services corresponding to the first service type, and the second service response further includes the identification information of the one or more target services.

For specific operations of the units in the communication apparatus 1300, refer to descriptions corresponding to the target first network node or the modules in the target first network node in the foregoing method embodiments. Details are not described herein again.

In a possible implementation, in the communication apparatuses shown in FIG. 11, FIG. 12, and FIG. 13, the processing unit may be one or more processors/logic circuits, the sending unit may be a transmitter, the receiving unit may be a receiver, and the sending unit and the receiving unit may be integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information (for example, sending the first service request or the first service response) in the foregoing method may be understood as a process of outputting the foregoing information by the processor. When outputting the foregoing information, the processor may output the foregoing information to the transceiver, so that the transceiver transmits the information. After the information is output by the processor, other processing may further need to be performed on the information before the information arrives at the transceiver. Similarly, a process of receiving information (for example, receiving the first service request or the first service response) in the foregoing method may be understood as a process of receiving the foregoing input information by the processor. When the processor receives the input information, the transceiver receives the information and inputs the information to the processor. Further, after the transceiver receives the information, other processing may need to be performed on the information before processed information is input into the processor.

In another possible implementation, in the communication apparatuses shown in FIG. 11, FIG. 12, and FIG. 13, the processing unit may be one or more processors/logic circuits. The sending unit may be an output interface, and the receiving unit may be an input interface. The sending unit and the receiving unit are integrated into one unit, for example, an input/output interface, or referred to as a communication interface, an interface circuit, an interface, or the like.

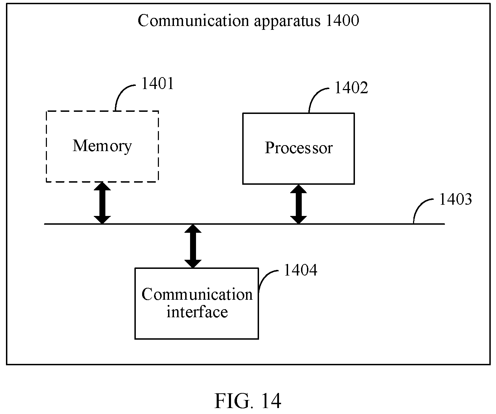

FIG. 14 is a diagram of a possible hardware structure of a communication apparatus 1400 according to an embodiment of this application. The communication apparatus 1400 may include a communication interface 1404 and at least one processor 1402. Optionally, a bus 1403 may be further included. Further, optionally, at least one memory 1401 may be further included. The memory 1401, the processor 1402, and the communication interface 1404 may be connected through the bus 1403.

The memory 1401 is configured to provide a storage space, and the storage space may store data such as an operating system and a computer program. The memory 1401 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

The processor 1402 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application specific integrated circuit (Application Specific Integrated Circuit, ASIC), a field programmable gate array (Field Programmable Gate Array, FPGA), and a complex programmable logic device (Complex programmable logic device, CPLD).

The communication interface 1404 is configured to receive data sent by the outside and/or send data to the outside, and may be a wired link interface including, for example, an Ethernet cable, or may be a wireless (Wi-Fi, Bluetooth, general wireless transmission, and the like) link interface. Optionally, the communication interface 1404 may further include a transmitter (for example, a radio frequency transmitter or an antenna), a receiver, or the like coupled to the interface.

In a design, the communication apparatus 1400 may be configured to perform a function of the first terminal device in the foregoing embodiments. For details, refer to descriptions corresponding to the first terminal device in the foregoing method embodiments. Details are not described herein again.

In another design, the communication apparatus 1400 may be configured to perform a function of the first access network device in the foregoing embodiments. For details, refer to descriptions corresponding to the first access network device in the foregoing method embodiments. Details are not described herein again.

In still another design, the communication apparatus 1400 may be configured to perform a function of the target first network node in the foregoing embodiment. For details, refer to descriptions corresponding to the target first network node in the foregoing method embodiments. Details are not described herein again.

In a possible design, the processor 1402 in the apparatus 1400 is configured to read a computer program stored in the memory 1401, and is configured to perform an operation performed by the first terminal device, the first access network device, or the target first network node in the foregoing communication method, for example, the communication method described in any embodiment in FIG. 7, FIG. 8, FIG. 9, or FIG. 10.

It should be noted that the communication apparatus 1400 shown in FIG. 14 is merely an implementation of this embodiment of this application. In actual application, the communication apparatus 1400 may further include more or fewer components. This is not limited herein.

An embodiment of this application further discloses a communication system. The communication system includes a first terminal device and a first access network device. The first terminal device is configured to perform an operation performed by the first terminal device in any one of the foregoing method embodiments. The first access network device is configured to perform an operation performed by the first access network device in any one of the foregoing method embodiments.

An embodiment of this application further discloses a communication system. The communication system includes a first terminal device, a first access network device, and a target first network node. The first terminal device is configured to perform an operation performed by the first terminal device in any one of the foregoing method embodiments. The first access network device is configured to perform an operation performed by the first access network device in any one of the foregoing method embodiments. The target first network node is configured to perform an operation performed by the target first network node in any one of the foregoing method embodiments.

An embodiment of this application further discloses a chip. The chip includes a processor. The processor is configured to execute a computer program or computer instructions stored in a memory, so that the chip performs an operation performed by the first terminal device in the foregoing method embodiments, or the chip performs an operation performed by the first access network device in the foregoing method embodiments, or the chip performs an operation performed by the target first network node in the foregoing method embodiments.

In a possible implementation, the memory is located outside the chip.

An embodiment of this application further discloses a computer-readable storage medium. The computer-readable storage medium stores instructions. When the instructions are executed, an operation performed by the first terminal device in the foregoing method embodiments, an operation performed by the first access network device in the foregoing method embodiments, or an operation performed by the target first network node in the foregoing method embodiments is performed.

An embodiment of this application further discloses a computer program product including instructions. When the instructions are executed, an operation performed by the first terminal device in the foregoing method embodiments, an operation performed by the first access network device in the foregoing method embodiments, or an operation performed by the target first network node in the foregoing method embodiments is performed.

It should be understood that sending in embodiments of this application may be direct sending, or may be indirect sending. Direct sending means that a device or module directly sends information/data to a corresponding device or module, and indirect sending means that a device or module sends information/data to a corresponding device or module via another device or module.

Clearly, the described embodiments are only some but not all of embodiments of this application. "Embodiment" mentioned in the specification means that a particular feature, structure, or characteristic described with reference to embodiments may be included in at least one of embodiments of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments. All other embodiments obtained by a person of ordinary skill in the art based on embodiments of this application without creative efforts shall fall within the protection scope of this application. In the specification, claims, and accompanying drawings of this application, the terms "first", "second", "third", and the like are used to distinguish between different objects but do not describe a particular order. In addition, terms such as "include" and "have" and any other variations thereof are intended to cover a non-exclusive inclusion. For example, a series of steps or units are included; or optionally, a step or unit that is not listed is further included; or optionally, another inherent step or unit of the process, the method, the product, or the device is further included. It may be understood that, in some embodiments, an equal sign of the foregoing condition determining may be greater than one end or less than one end. For example, the foregoing condition determining for a threshold greater than, or less than or equal to may be changed to a condition determining for a threshold greater than or equal to, or less than. This is not limited herein. It may be further understood that, for an architecture including a plurality of devices or modules, if one of the devices or modules generates one piece of information, and another device or module uses the information, the another device may obtain the information in a plurality of manners. For example, one manner may be that the device or module that generates the information may directly send the information to the device or module that uses the information (which is equivalent to direct sending), or one manner may be that the device or module that generates the information may send, via another device or module, the information to the device or module that uses the information (which is equivalent to indirect sending).

It may be understood that the accompanying drawings show only some but not all content related to this application. It should be understood that some example embodiments are described as processing or methods depicted as flowcharts. Although the flowchart describes operations (or steps) as sequential processing, many of the operations can be implemented in parallel, concurrently, or simultaneously. In addition, the sequence of operations can be rearranged, provided that it is logical. The processing may be terminated upon completion of its operation, but may further have additional steps not included in the accompanying drawings. The processing may correspond to a method, a function, a procedure, a subroutine, a subprogram, or the like.

Terms such as "component", "module", "system", and "unit" used in this specification indicate computer-related entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other based on signals of one or more data groups (for example, second unit data exchanged with a local system, a distributed system, and/or another unit between networks such as an internet interacting with another system through signals) through a local and/or remote process.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, applied to a first terminal device, comprising:
sending a first service request to a first access network device, wherein the first service request comprises identification information of a first service type, and the first service request is used to request a service of the first service type in a target first network node;
receiving a first service response from the first access network device, wherein the first service response comprises first address information corresponding to the service of the first service type; and
transmitting, based on the first address information corresponding to the service of the first service type, service data corresponding to the first service type to the target first network node via the first access network device.

2. The method according to claim 1, wherein the first service request further comprises one or more of the following: identification information of the target first network node, quality of service information, capability information of the first terminal device, and service identification information.

3. The method according to claim 1 or 2, wherein the first service response further comprises service identification information and/or a radio bearer configuration.

4. The method according to any one of claims 1 to 3, wherein before the sending the first service request to the first access network device, the method further comprises:
receiving service configuration information from the first access network device, wherein the service configuration information comprises identification information of one or more first network nodes, and the one or more first network nodes comprise the target first network node.

5. The method according to claim 4, wherein the identification information of the one or more first network nodes comprises identifiers of the one or more first network nodes and/or first address information of the one or more first network nodes.

6. The method according to claim 4 or 5, wherein the service configuration information further comprises information about one or more service types supported by each of the one or more first network nodes, and the information about the one or more service types comprises identification information of the one or more service types.

7. The method according to any one of claims 1 to 6, wherein the first address information corresponding to the service of the first service type comprises first address information of one or more target services corresponding to the first service type, and the first service response further comprises identification information of the one or more target services.

8. A communication method, applied to a first access network device, comprising:
receiving a first service request from a first terminal device, wherein the first service request comprises identification information of a first service type, and the first service request is used to request a service of the first service type in a target first network node; and
sending a first service response to the first terminal device, wherein the first service response comprises first address information corresponding to the service of the first service type.

9. The method according to claim 8, wherein before the sending the first service response to the first terminal device, the method further comprises:
sending a second service request to the target first network node based on the first service request, wherein the second service request is used to request the service of the first service type in the target first network node; and
receiving a second service response from the target first network node, wherein the second service response comprises the first address information corresponding to the service of the first service type.

10. The method according to claim 9, wherein the first service request further comprises identification information of the target first network node, and the sending the second service request to the target first network node based on the first service request comprises:
sending the second service request to the target first network node based on the identification information of the target first network node.

11. The method according to claim 9 or 10, wherein the second service request comprises the identification information of the first service type.

12. The method according to claim 11, wherein the first service request further comprises one or more of the following: quality of service information, capability information of the first terminal device, and service identification information; and the second service request further comprises one or more of the following: the quality of service information, the capability information of the first terminal device, and the service identification information.

13. The method according to claim 11 or 12, wherein the second service request further comprises a first identifier of the first terminal device, and the first identifier of the first terminal device is used to identify the first terminal device in the first access network device.

14. The method according to any one of claims 11 to 13, wherein the second service response further comprises one or more of the following: the first identifier of the first terminal device, a second identifier of the first terminal device, a service session identifier, tunnel information on the target first network node side, and information about a service data flow to be established, and the second identifier of the first terminal device is used to identify the first terminal device in the target first network node.

15. The method according to claim 14, wherein the method further comprises:
sending a third service response to the target first network node, wherein the third service response comprises one or more of the following: the first identifier of the first terminal device, the second identifier of the first terminal device, the service session identifier, tunnel information on the first access network device side, and information about a service data flow that is not successfully established.

16. The method according to claim 9 or 10, wherein the second service request comprises identification information of one or more target services corresponding to the first service type.

17. The method according to claim 16, wherein the first service request further comprises quality of service information, and the method further comprises:
determining, based on the quality of service information, quality of service corresponding to the one or more target services, wherein the second service request further comprises the quality of service corresponding to the one or more target services.

18. The method according to any one of claims 9 to 17, wherein the second service response further comprises quality of service guaranteed by the one or more target services corresponding to the first service type, or air interface quality of service to be met on the first access network device side.

19. The method according to any one of claims 9 to 18, wherein the first address information corresponding to the service of the first service type comprises first address information of the one or more target services corresponding to the first service type, and the second service response further comprises the identification information of the one or more target services.

20. The method according to any one of claims 8 to 19, wherein the first service response further comprises service identification information and/or a radio bearer configuration.

21. The method according to any one of claims 8 to 20, wherein before the receiving the first service request from the first terminal device, the method further comprises:
sending service configuration information to the first terminal device, wherein the service configuration information comprises identification information of one or more first network nodes, and the one or more first network nodes comprise the target first network node.

22. The method according to claim 21, wherein the identification information of the one or more first network nodes comprises identifiers of the one or more first network nodes and/or first address information of the one or more first network nodes.

23. The method according to claim 21 or 22, wherein the service configuration information further comprises information about one or more service types supported by each of the one or more first network nodes, and the information about the one or more service types comprises identification information of the one or more service types.

24. A communication method, comprising:
receiving a second service request from a first access network device, wherein the second service request is used to request a service of the first service type in a target first network node; and
sending a second service response to the first access network device, wherein the second service response comprises first address information corresponding to the service of the first service type.

25. The method according to claim 24, wherein the second service request comprises identification information of the first service type.

26. The method according to claim 25, wherein the second service request further comprises one or more of the following: quality of service information, capability information of a first terminal device, and service identification information.

27. The method according to claim 25 or 26, wherein the second service request further comprises a first identifier of the first terminal device, and the first identifier of the first terminal device is used to identify the first terminal device in the first access network device.

28. The method according to any one of claims 25 to 27, wherein the second service response further comprises one or more of the following: the first identifier of the first terminal device, a second identifier of the first terminal device, a service session identifier, tunnel information on the target first network node side, and information about a service data flow to be established, and the second identifier of the first terminal device is used to identify the first terminal device in the target first network node.

29. The method according to claim 28, wherein the method further comprises:
receiving a third service response from the first access network device, wherein the third service response comprises one or more of the following: the first identifier of the first terminal device, the second identifier of the first terminal device, the service session identifier, tunnel information on the first access network device side, and information about a service data flow that is not successfully established.

30. The method according to claim 24, wherein the second service request comprises identification information of one or more target services corresponding to the first service type.

31. The method according to claim 30, wherein the second service request further comprises quality of service corresponding to the one or more target services.

32. The method according to any one of claims 24 to 31, wherein the second service response further comprises quality of service that can be ensured by the one or more target services corresponding to the first service type, or air interface quality of service to be met on the first access network device side.

33. The method according to any one of claims 24 to 32, wherein the first address information corresponding to the service of the first service type comprises first address information of the one or more target services corresponding to the first service type, and the second service response further comprises the identification information of the one or more target services.

34. A communication apparatus, comprising:
a sending unit, configured to send a first service request to a first access network device, wherein the first service request comprises identification information of a first service type, and the first service request is used to request a service of the first service type in a target first network node; and
a receiving unit, configured to receive a first service response from the first access network device, wherein the first service response comprises first address information corresponding to the service of the first service type, wherein
the sending unit is further configured to transmit, based on the first address information corresponding to the service of the first service type, service data corresponding to the first service type to the target first network node via the first access network device.

35. A communication apparatus, comprising:
a receiving unit, configured to receive a first service request from a first terminal device, wherein the first service request comprises identification information of a first service type, and the first service request is used to request a service of the first service type in a target first network node; and
a sending unit, configured to send a first service response to the first terminal device, wherein the first service response comprises first address information corresponding to the service of the first service type.

36. A communication apparatus, comprising:
a receiving unit, configured to receive a second service request from a first access network device, wherein the second service request is used to request a service of the first service type in a target first network node; and
a sending unit, configured to send a second service response to the first access network device, wherein the second service response comprises first address information corresponding to the service of the first service type.

37. A communication apparatus, comprising a processor and a communication interface, wherein the communication interface is configured to receive and/or send data, and the processor invokes a computer program or computer instructions stored in a memory to implement the method according to any one of claims 1 to 7, or implement the method according to any one of claims 8 to 23, or implement the method according to any one of claims 24 to 33.

38. A computer-readable storage medium, wherein the computer-readable storage medium stores a computer program or computer instructions, and the computer program or the computer instructions are executed by a processor to implement the method according to any one of claims 1 to 7, or implement the method according to any one of claims 8 to 23, or implement the method according to any one of claims 24 to 33.

39. A computer program product, wherein the computer program product comprises computer program code or computer instructions, and when the computer program code or the computer instructions are run, the method according to any one of claims 1 to 7 is implemented, or the method according to any one of claims 8 to 23 is implemented, or the method according to any one of claims 24 to 33 is implemented.
